# EUROPEAN PATENT APPLICATION

(11) **EP 4 783 606 A1**
(43) Date of publication of application: **29.07.2026**
(21) Application number: 25869667.3
(22) Date of filing: 24.11.2025
(51) Int. Cl.: H04Q 11/00

(54) **OPTICAL INTERCONNECTION MODULE, OPTICAL INTERCONNECTION APPARATUS, AND COMPUTING SYSTEM**

(30) Priority: 25.11.2024 CN 202411703481
(71) Applicant: Shanghai Xizhi Technology Co., Ltd., Shanghai 201203 (CN)
(72) Inventor: SHEN, Yichen, Shanghai 201203 (CN); MENG, Huaiyu, Shanghai 201203 (CN); LV, Wenqing, Shanghai 201203 (CN); WANG, Long, Shanghai 201203 (CN); HU, Tao, Shanghai 201203 (CN)
(74) Representative: Marks & Clerk LLP
(86) International application number: PCT/CN2025/137119
(87) International publication number: WO 2026/109031

(57) **Abstract**

The present disclosure provides an optical interconnection module, an optical interconnection apparatus, and a computing system. The optical interconnection module includes a photonic integrated circuit chip and a transceiver electrical chip. The photonic integrated circuit chip includes a first optical switching section and a second optical switching section. The first optical switching section includes a plurality of first optical switching input ports, a plurality of first optical switching output ports, a plurality of second optical switching output ports, and a plurality of third optical switching output ports, an optical signal input from each first optical switching input port is selectively output from corresponding one of the plurality of first optical switching output ports, corresponding one of the plurality of second optical switching output ports, or corresponding one of the plurality of third optical switching output ports. The second optical switching section includes a plurality of second optical switching input ports and a plurality of fourth optical switching output ports, and each of the plurality of second optical switching input ports is connected to corresponding one of the plurality of first optical switching output ports.

## Description

This application claims priority to Chinese Patent Application No. 202411703481.2 filed on November 25, 2024, the entire disclosure of which is incorporated herein by reference as part of this application.

### TECHNICAL FIELD

The present disclosure relates to the field of optoelectronic communication and computing, and in particular, to an optical interconnection module, an optical interconnection apparatus including the optical interconnection module, and a computing system based on the optical interconnection apparatus.

### BACKGROUND

With the development of artificial intelligence (AI), AI accelerator interconnection networks have become critical to improving the computing power of computing hardware. In a traditional AI accelerator interconnection network, a plurality of computing modules implement point-to-point interconnection on a printed circuit board (PCB) through PCB traces. However, due to the distance transmission limitation on the PCB, the computing scale of a single node is limited, for example, generally limited to eight computing modules. Moreover, since the PCB traces are fixed, the interconnection between the computing modules cannot be reconfigured.

### SUMMARY

The present disclosure provides an optical interconnection module capable of quickly and flexibly changing connections between computing modules, an optical interconnection apparatus including the optical interconnection module, and a computing system with improved bandwidth utilization and scalability.

According to an aspect of the present disclosure, an optical interconnection module is provided, including a photonic integrated circuit chip and a transceiver electrical chip electrically connected to the photonic integrated circuit chip, wherein the photonic integrated circuit chip includes an electrical-to-optical conversion section, a first optical switching section, a second optical switching section, and an optical-to-electrical conversion section, the electrical-to-optical conversion section generates an optical signal output to the first optical switching section according to an electrical signal output from the transceiver electrical chip, the first optical switching section includes a plurality of first optical switching input ports, a plurality of first optical switching output ports, a plurality of second optical switching output ports, and a plurality of third optical switching output ports, an optical signal input from each first optical switching input port is selectively output from a corresponding one of the plurality of first optical switching output ports, a corresponding one of the plurality of second optical switching output ports, or a corresponding one of the plurality of third optical switching output ports, the second optical switching section includes a plurality of second optical switching input ports and a plurality of fourth optical switching output ports connected through reconfigurable optical paths, each of the plurality of second optical switching input ports of the second optical switching section is connected to a corresponding one of the plurality of first optical switching output ports of the first optical switching section, the optical-to-electrical conversion section includes a plurality of first optical input ports and a plurality of first electrical output ports, an optical signal input from the plurality of first optical input ports is converted into an electrical signal output from the plurality of first electrical output ports to the transceiver electrical chip, and first portion of the plurality of first optical input ports are respectively connected to the plurality of fourth optical switching output ports of the second optical switching section.

In some embodiments, the first optical switching section includes a plurality of first optical switching units and a plurality of second optical switching units, each first optical switching unit includes a first optical switching input port, a first optical switching output port, and a fifth optical switching output port, an optical signal input from the first optical switching input port is selectively output from the first optical switching output port or the fifth optical switching output port, and each second optical switching unit includes a third optical switching input port, a second optical switching output port, and a third optical switching output port, an optical signal input from the third optical switching input port is selectively output from the second optical switching output port or the third optical switching output port, and the third optical switching input port of each second optical switching unit is connected to the fifth optical switching output port of a corresponding first optical switching unit of the plurality of first optical switching units.

In some embodiments, the first optical switching section includes a plurality of first optical switching units, each first optical switching unit includes a first optical switching input port, a first optical switching output port, a second optical switching output port, and a third optical switching output port, and an optical signal input from the first optical switching input port is selectively output from the first optical switching output port, the second optical switching output port, or the third optical switching output port.

In some embodiments, the photonic integrated circuit chip further includes a first optical coupler, a second optical coupler, a third optical coupler, and a fourth optical coupler, the first optical coupler is connected to the plurality of second optical switching output ports of the first optical switching section, the second optical coupler is connected to the plurality of third optical switching output ports of the first optical switching section, the third optical coupler is connected to second portion of the plurality of first optical input ports of the optical-to-electrical conversion section, and the fourth optical coupler is connected to third portion of the plurality of first optical input ports of the optical-to-electrical conversion section.

In some embodiments, the first optical switching section further includes a plurality of sixth optical switching output ports and a plurality of seventh optical switching output ports, and an optical signal input from each first optical switching input port of the first optical switching section is selectively output from a corresponding one of the plurality of first optical switching output ports, a corresponding one of the plurality of second optical switching output ports, a corresponding one of the plurality of third optical switching output ports, a corresponding one of the plurality of sixth optical switching output ports, or a corresponding one of the plurality of seventh optical switching output ports.

In some embodiments, the first optical switching section includes a plurality of first optical switching units, a plurality of second optical switching units, a plurality of third optical switching units, and a plurality of fourth optical switching units, each first optical switching unit includes a first optical switching input port, a first optical switching output port, and a fifth optical switching output port, an optical signal input from the first optical switching input port is selectively output from the first optical switching output port or the fifth optical switching output port, each second optical switching unit includes a third optical switching input port, an eighth optical switching output port, and a ninth optical switching output port, an optical signal input from the third optical switching input port is selectively output from the eighth optical switching output port or the ninth optical switching output port, the third optical switching input port of each second optical switching unit is connected to the fifth optical switching output port of a corresponding first optical switching unit of the plurality of first optical switching units, each third optical switching unit includes a fourth optical switching input port, a second optical switching output port, and a third optical switching output port, an optical signal input from the fourth optical switching input port is selectively output from the second optical switching output port or the third optical switching output port, the fourth optical switching input port of each third optical switching unit is connected to the eighth optical switching output port of a corresponding second optical switching unit of the plurality of second optical switching units, each fourth optical switching unit includes a fifth optical switching input port, a sixth optical switching output port, and a seventh optical switching output port, an optical signal input from the fifth optical switching input port is selectively output from the sixth optical switching output port or the seventh optical switching output port, and the fifth optical switching input port of each fourth optical switching unit is connected to the ninth optical switching output port of a corresponding second optical switching unit of the plurality of second optical switching units.

In some embodiments, the first optical switching section includes a plurality of first optical switching units, each first optical switching unit includes a first optical switching input port, a first optical switching output port, a second optical switching output port, a third optical switching output port, a sixth optical switching output port, and a seventh optical switching output port, and an optical signal input from the first optical switching input port is selectively output from the first optical switching output port, the second optical switching output port, the third optical switching output port, the sixth optical switching output port, or the seventh optical switching output port.

In some embodiments, the photonic integrated circuit chip further includes a first optical coupler, a second optical coupler, a third optical coupler, a fourth optical coupler, a fifth optical coupler, a sixth optical coupler, a seventh optical coupler, and an eighth optical coupler, the first optical coupler is connected to the plurality of second optical switching output ports of the first optical switching section, the second optical coupler is connected to the plurality of third optical switching output ports of the first optical switching section, the third optical coupler is connected to second portion of the plurality of first optical input ports of the optical-to-electrical conversion section, the fourth optical coupler is connected to third portion of the plurality of first optical input ports of the optical-to-electrical conversion section, the fifth optical coupler is connected to the plurality of sixth optical switching output ports of the first optical switching section, the sixth optical coupler is connected to the plurality of seventh optical switching output ports of the first optical switching section, the seventh optical coupler is connected to fourth portion of the plurality of first optical input ports of the optical-to-electrical conversion section, and the eighth optical coupler is connected to fifth portion of the plurality of first optical input ports of the optical-to-electrical conversion section.

In some embodiments, the electrical-to-optical conversion section includes a plurality of optical modulators, and the plurality of optical modulators are configured to modulate optical carriers input to the plurality of optical modulators into optical signals output to the first optical switching section according to electrical signals output from the transceiver electrical chip.

In some embodiments, the optical-to-electrical conversion section further includes a plurality of photodetectors, and the plurality of photodetectors are configured to convert optical signals input from the plurality of first optical input ports of the optical-to-electrical conversion section into electrical signals output to the transceiver electrical chip.

In some embodiments, the optical-to-electrical conversion section further includes a plurality of fifth optical switching units, the plurality of first optical input ports of the optical-to-electrical conversion section include a first portion, a second portion, and a third portion, and each fifth optical switching unit is configured to selectively transmit an optical signal output from a corresponding first optical input port of the first portion, a corresponding first optical input port of the second portion, or a corresponding first optical input port of the third portion to a corresponding one of the plurality of photodetectors.

In some embodiments, the photonic integrated circuit chip further includes a plurality of wavelength multiplexers, each wavelength multiplexer includes a plurality of second optical input ports and one second optical output port, lights of different wavelengths from the electrical-to-optical conversion section are respectively input from the plurality of second optical input ports of each wavelength multiplexer and output from the one second optical output port of each wavelength multiplexer, and the one second optical output port of each wavelength multiplexer is connected to a corresponding one of the plurality of first optical switching input ports of the first optical switching section.

In some embodiments, the photonic integrated circuit chip further includes a plurality of demultiplexers, each demultiplexer includes one third optical input port and a plurality of third optical output ports, lights of different wavelengths from outside the optical interconnection module or from the second optical switching section of the optical interconnection module are input from the one third optical input port of each demultiplexer and respectively output from the plurality of third optical output ports of each demultiplexer, and the plurality of third optical output ports of each demultiplexer are connected to corresponding first optical input ports of the plurality of first optical input ports of the optical-to-electrical conversion section.

In some embodiments, each of the first optical switching units and the second optical switching units includes: a first beam splitter including one fourth optical input port and two fourth optical output ports; a second beam splitter including two fifth optical input ports and two fifth optical output ports; and two phase shifters respectively connected between the two fourth optical output ports of the first beam splitter and the two fifth optical input ports of the second beam splitter.

In some embodiments, the second optical switching section includes a plurality of sixth optical switching units, each sixth optical switching unit includes: a third beam splitter including two sixth optical input ports and two sixth optical output ports; a fourth beam splitter including two seventh optical input ports and two seventh optical output ports; and two phase shifters respectively connected between the two sixth optical output ports of the third beam splitter and the two seventh optical input ports of the fourth beam splitter.

In some embodiments, the optical interconnection module further includes a packaging substrate, wherein the photonic integrated circuit chip is disposed on the packaging substrate, the transceiver electrical chip is flip-chip mounted on a surface of the photonic integrated circuit chip opposite to the packaging substrate, and the transceiver electrical chip receives electrical signals from outside the optical interconnection module and transmits electrical signals to outside the optical interconnection module through conductive via in the photonic integrated circuit chip.

In some embodiments, the optical interconnection module further includes a plurality of optical switching control electrical chips, the plurality of optical switching control electrical chips are electrically connected to the photonic integrated circuit chip, and are configured to control the first optical switching section and the second optical switching section to select transmission paths of optical signals in the first optical switching section and the second optical switching section.

According to an aspect of the present disclosure, an optical interconnection apparatus is provided, including: a first printed circuit board (PCB); one or more above-mentioned optical interconnection modules disposed on the first PCB; an electrical signal interface connected to the transceiver electrical chip of the optical interconnection module; a first optical signal interface connected to the plurality of second optical switching output ports of the first optical switching section of the photonic integrated circuit chip of the optical interconnection module and second portion of the plurality of first optical input ports of the optical-to-electrical conversion section; and a second optical signal interface connected to the plurality of third optical switching output ports of the first optical switching section of the photonic integrated circuit chip of the optical interconnection module and third portion of the plurality of first optical input ports of the optical-to-electrical conversion section.

In some embodiments, the optical interconnection apparatus further includes a third optical signal interface and a fourth optical signal interface, wherein the first optical switching section further includes a plurality of sixth optical switching output ports and a plurality of seventh optical switching output ports, an optical signal input from each first optical switching input port of the first optical switching section is selectively output from a corresponding one of the plurality of first optical switching output ports, a corresponding one of the plurality of second optical switching output ports, a corresponding one of the plurality of third optical switching output ports, a corresponding one of the plurality of sixth optical switching output ports, or a corresponding one of the plurality of seventh optical switching output ports, the third optical signal interface is connected to the plurality of sixth optical switching output ports of the first optical switching section of the photonic integrated circuit chip of the optical interconnection module and fourth portion of the plurality of first optical input ports of the optical-to-electrical conversion section, and the fourth optical signal interface is connected to the plurality of seventh optical switching output ports of the first optical switching section of the photonic integrated circuit chip of the optical interconnection module and fifth portion of the plurality of first optical input ports of the optical-to-electrical conversion section.

In some embodiments, the optical interconnection apparatus further includes one or more retimers, the one or more retimers are disposed on the first PCB, connected between the electrical signal interface and the one or more optical interconnection modules, and configured to convert a first electrical signal received from the electrical signal interface into a second electrical signal output to the one or more optical interconnection modules, and convert a third electrical signal received from the one or more optical interconnection modules into a fourth electrical signal output from the electrical signal interface.

In some embodiments, the optical interconnection apparatus further includes a light source module disposed on the first PCB and configured to generate optical carriers, the light source module is connected to the electrical-to-optical conversion section of the photonic integrated circuit chip of each optical interconnection module, such that the optical carriers are output to the electrical-to-optical conversion section and converted by the electrical-to-optical conversion section into optical signals output to the first optical switching section of the photonic integrated circuit chip.

According to an aspect of the present disclosure, a computing system is provided, including: a plurality of computing apparatuses, each computing apparatus includes a second printed circuit board (PCB), a plurality of computing modules disposed on the second PCB, and a plurality of above-mentioned optical interconnection apparatuses; and at least one optical switch, wherein each computing apparatus is optically interconnected with at least part of the at least one optical switch through one or more optical interconnection apparatuses in each computing apparatus, and at least part of the plurality of computing apparatuses are optically interconnected with each other through the at least one optical switch.

In some embodiments, the at least one optical switch is capable of reconstructing optical links between the plurality of computing apparatuses, such that any two computing apparatuses of the plurality of computing apparatuses communicate with each other.

In some embodiments, the plurality of computing apparatuses include a first computing apparatus, a second computing apparatus, and a third computing apparatus, and the at least one optical switch is capable of establishing an optical link between the first portion of the plurality of optical interconnection apparatuses of the first computing apparatus and a portion of the plurality of optical interconnection apparatuses of the second computing apparatus, and establishing an optical link between the second portion of the plurality of optical interconnection apparatuses of the first computing apparatus and a portion of the plurality of optical interconnection apparatuses of the third computing apparatus, such that the first computing apparatus communicates with the second computing apparatus and the third computing apparatus simultaneously.

According to embodiments of the present disclosure, through the optical interconnection module and the optical interconnection apparatus including the optical interconnection module, connections between computing modules can be quickly and flexibly changed, and a topology can be quickly switched according to a specific artificial intelligence model, thereby effectively improving bandwidth utilization and scalability of an artificial intelligence computing system.

### BRIEF DESCRIPTION OF DRAWINGS

Fig. 1A shows a schematic cross-sectional view of an example of an optical interconnection module according to an embodiment of the present disclosure.
Fig. 1B shows a schematic plan view of an example of an optical interconnection module according to an embodiment of the present disclosure.
Fig. 2A shows a schematic plan view of an example of a first switching section of an optical interconnection module according to an embodiment of the present disclosure.
Fig. 2B shows a schematic plan view of another example of a first switching section of an optical interconnection module according to an embodiment of the present disclosure.
Fig. 2C shows a schematic plan view of yet another example of a first switching section of an optical interconnection module according to an embodiment of the present disclosure.
Fig. 3A shows a schematic plan view of another example of an optical interconnection module according to an embodiment of the present disclosure.
Fig. 3B shows a schematic plan view of yet another example of an optical interconnection module according to an embodiment of the present disclosure.
Fig. 4 shows a schematic plan view of an example of a second optical switching section according to an embodiment of the present disclosure.
Fig. 5A shows a schematic plan view of an example of an optical switching unit of a first optical switching section according to an embodiment of the present disclosure.
Fig. 5B shows a schematic plan view of an example of an optical switching unit of a second optical switching section according to an embodiment of the present disclosure.
Fig. 6A shows a schematic plan view of an example of an optical interconnection apparatus according to an embodiment of the present disclosure.
Fig. 6B shows a schematic cross-sectional view of an example of an optical interconnection apparatus according to an embodiment of the present disclosure.
Fig. 7 shows a schematic plan view of an example of a computing apparatus according to an embodiment of the present disclosure.
Fig. 8 shows a schematic diagram of a topology between computing modules according to an embodiment of the present disclosure.
Fig. 9 shows a schematic plan view of an example of a computing system according to an embodiment of the present disclosure.

### DETAILED DESCRIPTION

Embodiments of the present disclosure will be described in more detail below with reference to the accompanying drawings. Although some embodiments of the present disclosure are shown in the drawings, it should be understood that the present disclosure should not be construed as being limited to the embodiments set forth herein; rather, these embodiments are provided for a more thorough and complete understanding of the present disclosure. It should be understood that the drawings and embodiments of the present disclosure are for exemplary purposes only and are not intended to limit the protection scope of the present disclosure.

It should be noted that various parts or components described in various embodiments of the present disclosure are merely illustrative. In some cases, some of the parts or components may be omitted, or replaced with other parts or components having the same or similar functions, or additional parts or components may be added.

In addition, various parts or components described separately or in combination in various embodiments of the present disclosure are described for convenience only, which does not mean that they are actually separated or combined physically, nor does it mean that such separation or combination is necessary. Those skilled in the art may arbitrarily separate or combine various parts or components according to actual needs.

Any of the above variations or combinations fall within the protection scope of the present disclosure without departing from the inventive concept of the present disclosure.

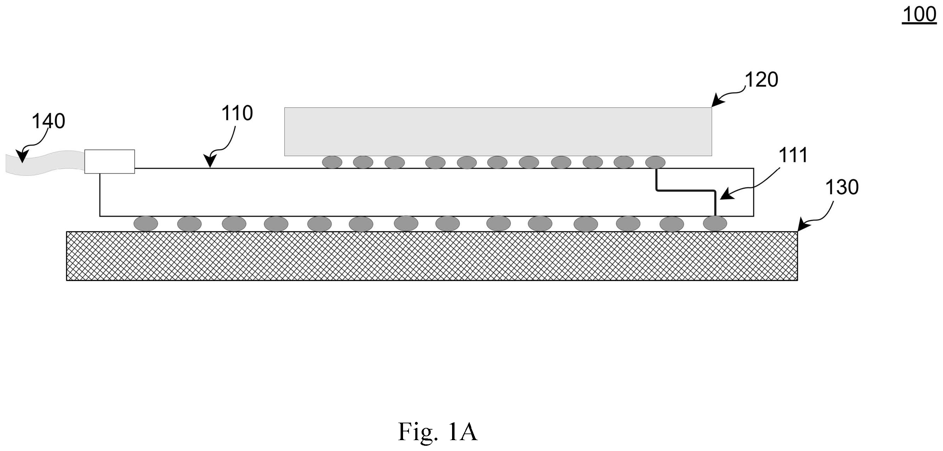

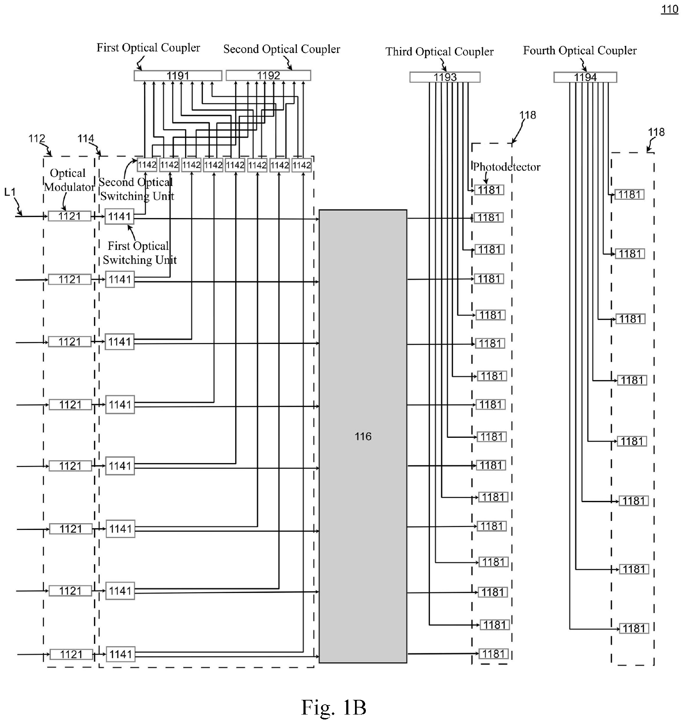

Fig. 1A shows a schematic cross-sectional view of an example of an optical interconnection module 100 according to an embodiment of the present disclosure. Fig. 1B shows a schematic plan view of an example of an optical interconnection module 100 according to an embodiment of the present disclosure.

Referring to Fig. 1A, an optical interconnection module 100 according to an embodiment of the present disclosure may include a photonic integrated circuit chip 110 and a transceiver electrical chip 120 electrically connected to the photonic integrated circuit chip 110. According to an embodiment of the present disclosure, the optical interconnection module 100 may further include a packaging substrate 130, the photonic integrated circuit chip 110 is disposed on the packaging substrate 130, and the transceiver electrical chip 120 is flip-chip mounted on a surface of the photonic integrated circuit chip 110 opposite to the packaging substrate 130. The transceiver electrical chip 120 may receive electrical signals from outside the optical interconnection module 100 and transmit electrical signals to outside the optical interconnection module 100 through conductive via 111 in the photonic integrated circuit chip 110.

The transceiver electrical chip 120 may be configured to convert a first electrical signal from the photonic integrated circuit chip 110 into a second electrical signal output to outside the optical interconnection module 100, and convert a third electrical signal from outside the optical interconnection module 100 into a fourth electrical signal transmitted to the photonic integrated circuit chip 110. For example, the transceiver electrical chip 120 may convert a first analog electrical signal from the photonic integrated circuit chip 110 into a first digital electrical signal output to outside the optical interconnection module 100, and convert a second digital electrical signal from outside the optical interconnection module 100 into a second analog electrical signal transmitted to the photonic integrated circuit chip 110. The photonic integrated circuit chip 110 may include an optical signal input port and an optical signal output port, and may perform optical communication with external devices through optical fibers 140 connected to the optical signal input port and the optical signal output port.

At electrical connections between the transceiver electrical chip 120 and the photonic integrated circuit chip 110, bumps may be provided on the transceiver electrical chip 120 and/or the photonic integrated circuit chip 110 to achieve good electrical connection. At electrical connections between the photonic integrated circuit chip 110 and the packaging substrate 130, bumps may be provided on the photonic integrated circuit chip 110 and/or the packaging substrate 130 to achieve good electrical connection.

According to an embodiment of the present disclosure, a material forming the photonic integrated circuit chip 110 may include silicon, silicon nitride, indium phosphide, gallium arsenide, lithium niobate, or a combination thereof, but the present disclosure is not limited thereto. According to an embodiment of the present disclosure, the conductive via 111 in the photonic integrated circuit chip 110 may be formed by etching the photonic integrated circuit chip 110 using an etching process to form through hole in the photonic integrated circuit chip 110, and filling a conductive material in the through hole using processes such as electroplating, physical vapor deposition, chemical vapor deposition, atomic layer deposition, etc.

Referring to Fig. 1B, a photonic integrated circuit chip 110 according to an embodiment of the present disclosure may include an electrical-to-optical conversion section 112, a first optical switching section 114, a second optical switching section 116, and a optical-to-electrical conversion section 118.

The electrical-to-optical conversion section 112 may generate an optical signal output to the first optical switching section 114 according to a fourth electrical signal output from the transceiver electrical chip 120. According to an embodiment of the present disclosure, the electrical-to-optical conversion section 112 may include a plurality of optical modulators 1121, and the plurality of optical modulators 1121 are used to modulate optical carriers L1 input to the plurality of optical modulators 1121 into optical signals output to the first optical switching section 114 according to the fourth electrical signal output from the transceiver electrical chip 120. According to an embodiment of the present disclosure, the photonic integrated circuit chip 110 may further include a light source input port, and the optical carriers L1 are input to the plurality of optical modulators 1121 through the light source input port. The optical modulator 1121 may modulate characteristics, such as amplitude and phase, of the optical carrier L1, thereby modulating information carried in the electrical signal output from the transceiver electrical chip 120 onto the optical carrier L1 to form an optical signal supplied to the first optical switching section 114. Optionally, the optical carrier L1 modulated by the optical modulator 1121 may be generated inside the optical interconnection module 100. In this case, the optical interconnection module 100 may not include a light source input port, but may include an optical emitter used to emit an optical carrier to be modulated. For example, the optical emitter may be disposed in the photonic integrated circuit chip 110. Typical examples of the optical modulator 1121 may include integrated photonic modulators such as silicon-based, indium phosphide, thin-film lithium niobate, or polymer, and may be a microring modulator, a Mach-Zehnder modulator, or an electro-absorption modulator in structure. However, the present disclosure is not limited thereto, and the optical modulator 1121 may be implemented using any suitable components in the art.

According to an embodiment of the present disclosure, the first optical switching section 114 may include a plurality of first optical switching input ports, a plurality of first optical switching output ports, a plurality of second optical switching output ports, and a plurality of third optical switching output ports, and an optical signal input from each first optical switching input port is selectively output from a corresponding one of the plurality of first optical switching output ports, a corresponding one of the plurality of second optical switching output ports, or a corresponding one of the plurality of third optical switching output ports. The plurality of first optical switching input ports of the first optical switching section 114 may be connected to the electrical-to-optical conversion section 112 to receive optical signals from the electrical-to-optical conversion section 112. The plurality of first optical switching output ports of the first optical switching section 114 may be connected to the second optical switching section 116 to selectively transmit optical signals to the second optical switching section 116. The photonic integrated circuit chip 110 includes a first optical signal output port and a second optical signal output port. The plurality of second optical switching output ports of the first optical switching section 114 may be connected to the first optical signal output port of the photonic integrated circuit chip 110 to selectively transmit optical signals to outside the optical interconnection module 100 (e.g., another optical interconnection module), and the plurality of third optical switching output ports of the first optical switching section 114 may be connected to the second optical signal output port of the photonic integrated circuit chip 110 to selectively transmit optical signals to outside the optical interconnection module 100 (e.g., yet another optical interconnection module). Although Fig. 1B shows that the first optical switching section 114 includes eight first optical switching input ports, eight first optical switching output ports, eight second optical switching output ports, and eight third optical switching output ports, the present disclosure is not limited thereto. The first optical switching section 114 may include other numbers of first optical switching input ports and numbers of first to third optical switching output ports corresponding to the number of first optical switching input ports.

According to an embodiment of the present disclosure, the photonic integrated circuit chip 110 may further include a first optical coupler 1191 and a second optical coupler 1192. The first optical coupler 1191 may be connected between the plurality of second optical switching output ports of the first optical switching section 114 and the first optical signal output port of the photonic integrated circuit chip 110, and output optical signals output from the plurality of second optical switching output ports of the first optical switching section 114 to outside the optical interconnection module 100 (e.g., another optical interconnection module) through an external optical fiber via the first optical signal output port of the photonic integrated circuit chip 110. The second optical coupler 1192 may be connected between the plurality of third optical switching output ports of the first optical switching section 114 and the second optical signal output port of the photonic integrated circuit chip 110, and output optical signals output from the plurality of third optical switching output ports of the first optical switching section 114 to outside the optical interconnection module 100 (e.g., yet another optical interconnection module) through an external optical fiber via the second optical signal output port of the photonic integrated circuit chip 110.

According to an embodiment of the present disclosure, the second optical switching section 116 may include a plurality of second optical switching input ports and a plurality of fourth optical switching output ports connected through reconfigurable optical paths, and each of the plurality of second optical switching input ports of the second optical switching section 116 is connected to a corresponding one of the plurality of first optical switching output ports of the first optical switching section 114. According to an embodiment of the present disclosure, the second optical switching section 116 may be configured to selectively output an optical signal input from any one of the plurality of second optical switching input ports via at least one of the plurality of fourth optical switching output ports, so as to change an output path of the optical signal, thereby changing a topology of an optical transmission network. Although Fig. 1B shows that the second optical switching section 116 includes eight second optical switching input ports and eight fourth optical switching output ports, the present disclosure is not limited thereto. The second optical switching section 116 may include numbers of second optical switching input ports and fourth optical switching output ports corresponding to the number of first optical switching output ports of the first optical switching section 114.

According to an embodiment of the present disclosure, the optical-to-electrical conversion section 118 may include a plurality of first optical input ports and a plurality of first electrical output ports, optical signals input from the plurality of first optical input ports may be converted into electrical signals output from the plurality of first electrical output ports to the transceiver electrical chip 120, and the first portion of the plurality of first optical input ports are respectively connected to the plurality of fourth optical switching output ports of the second optical switching section 116 to selectively receive optical signals from the second optical switching section 116. The photonic integrated circuit chip 110 may include a first optical signal input port and a second optical signal input port. The second portion of the plurality of first optical input ports of the optical-to-electrical conversion section 118 may be connected to the first optical signal input port of the photonic integrated circuit chip 110 to selectively receive optical signals from outside the optical interconnection module 100 (e.g., another optical interconnection module), and the third portion of the plurality of first optical input ports of the optical-to-electrical conversion section 118 may be connected to the second optical signal input port of the photonic integrated circuit chip 110 to selectively receive optical signals from outside the optical interconnection module 100 (e.g., yet another optical interconnection module).

According to an embodiment of the present disclosure, the photonic integrated circuit chip 110 may further include a third optical coupler 1193 and a fourth optical coupler 1194. The third optical coupler 1193 may be connected between the second portion of the plurality of first optical input ports of the optical-to-electrical conversion section 118 and the first optical signal input port of the photonic integrated circuit chip 110, and transmit optical signals input from outside the optical interconnection module 100 (e.g., another optical interconnection module) through an external optical fiber via the first optical signal input port of the photonic integrated circuit chip 110 to the second portion of the plurality of first optical input ports of the optical-to-electrical conversion section 118. The fourth optical coupler 1194 may be connected between the third portion of the plurality of first optical input ports of the optical-to-electrical conversion section 118 and the second optical signal input port of the photonic integrated circuit chip 110, and transmit optical signals input from outside the optical interconnection module 100 (e.g., yet another optical interconnection module) through an external optical fiber via the second optical signal input port of the photonic integrated circuit chip 110 to the third portion of the plurality of first optical input ports of the optical-to-electrical conversion section 118.

The optical-to-electrical conversion section 118 may convert optical signals from outside the optical interconnection module 100 or from the second optical switching section 116 into electrical signals supplied to the transceiver electrical chip 120. According to an embodiment of the present disclosure, the optical-to-electrical conversion section 118 may include a plurality of photodetectors 1181. The plurality of photodetectors 1181 may be used to convert optical signals input from the plurality of first optical input ports of the optical-to-electrical conversion section 118 into electrical signals output to the transceiver electrical chip 120. The photodetector 1181 may include a microring detector or various types of photodiodes, such as a photomultiplier tube (PMT), an avalanche photodiode (APD), a silicon photomultiplier (SiPM), etc. However, the present disclosure is not limited thereto, and the photodetector 1181 may be implemented using any suitable components in the art.

According to an embodiment of the present disclosure, as shown in Fig. 1B, each first optical switching input port or each first optical switching unit 1141 of the first optical switching section 114 may correspond to one optical modulator 1121 in the electrical-to-optical conversion section 112 and three photodetectors 1181 in the optical-to-electrical conversion section 118, one of the three photodetectors 1181 is connected to the second optical switching section 116 to receive an optical signal from the second optical switching section 116, another one of the three photodetectors 1181 is connected to the third optical coupler 1193 to receive an optical signal from outside the photonic integrated circuit chip 110, and the remaining one of the three photodetectors 1181 is connected to the fourth optical coupler 1194 to receive another optical signal from outside the photonic integrated circuit chip 110. Although Fig. 1B shows that the electrical-to-optical conversion section 112 includes eight optical modulators 1121 and the optical-to-electrical conversion section 118 includes twenty-four photodetectors 1181, the present disclosure is not limited thereto. The numbers of optical modulators and photodetectors may be changed as needed.

In the present application, the first optical switching section 114 of the photonic integrated circuit chip 110 includes a plurality of first optical switching output ports connected to the second optical switching section 116, a plurality of second optical switching output ports connected to the first optical coupler 1191, and a plurality of third optical switching output ports connected to the second optical coupler 1192, so that transmission paths of optical signals entering the photonic integrated circuit chip 110 can be variously selected. Therefore, in the case of forming a large-scale computing system, the optical interconnection module 100 can provide a more flexible connection relationship to reduce the number of redundant devices of the computing system, thereby saving costs.

According to an embodiment of the present disclosure, as shown in Fig. 1B, the first optical switching section 114 may include a plurality of first optical switching units 1141 and a plurality of second optical switching units 1142. Each first optical switching unit 1141 may include a first optical switching input port, a first optical switching output port, and a fifth optical switching output port, and an optical signal input from the first optical switching input port may be selectively output from the first optical switching output port or the fifth optical switching output port. Each second optical switching unit 1142 may include a third optical switching input port, a second optical switching output port, and a third optical switching output port, and an optical signal input from the third optical switching input port may be selectively output from the second optical switching output port or the third optical switching output port. The third optical switching input port of each second optical switching unit 1142 may be connected to the fifth optical switching output port of a corresponding first optical switching unit 1141 of the plurality of first optical switching units 1141. The internal structure of the first optical switching section 114 is not limited to the structure shown in Fig. 1B, and may include various other configurations.

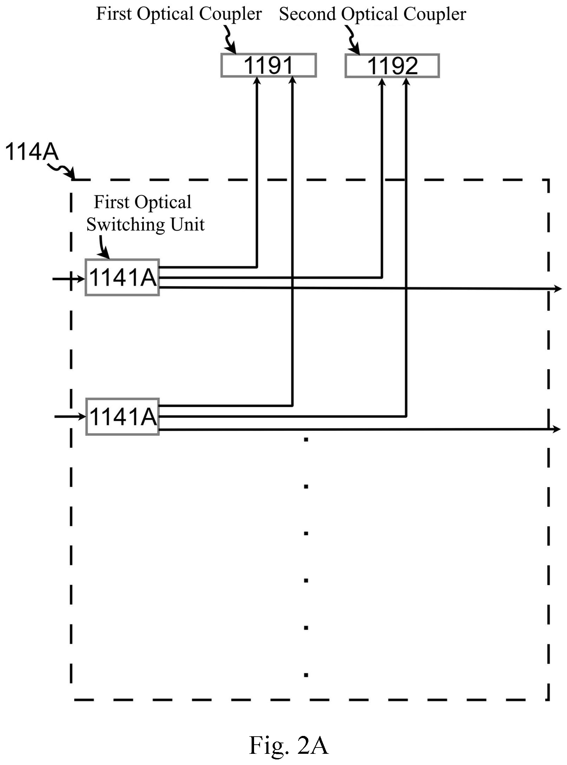

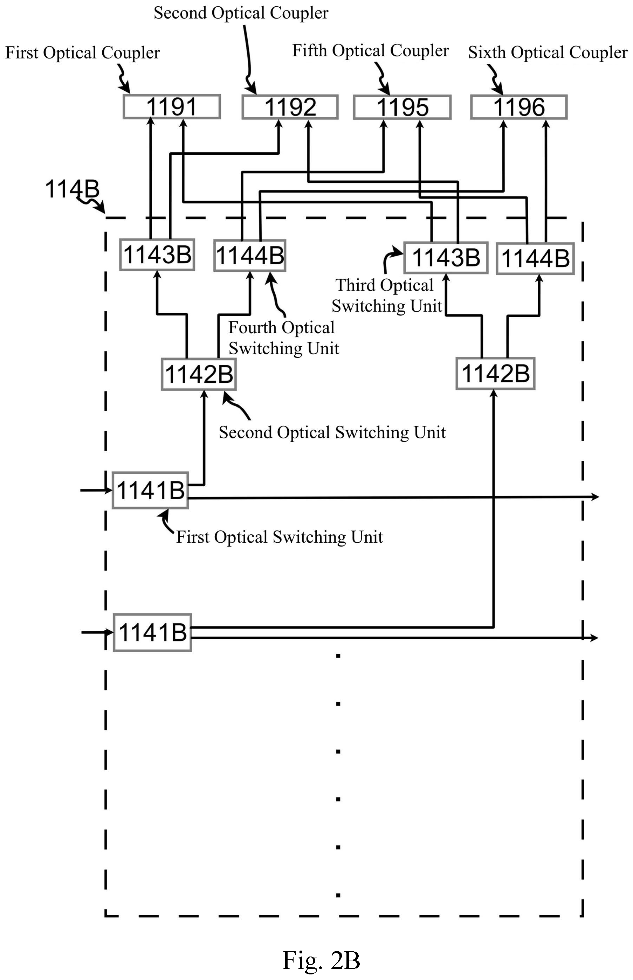

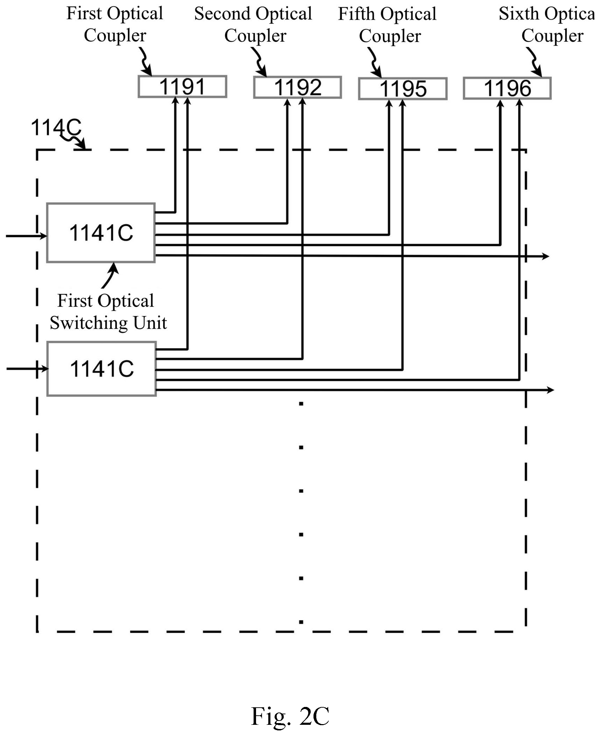

Fig. 2A shows a schematic plan view of an example of a first switching section 114A of an optical interconnection module according to an embodiment of the present disclosure. Fig. 2B shows a schematic plan view of another example of a first switching section 114B of an optical interconnection module according to an embodiment of the present disclosure. Fig. 2C shows a schematic plan view of yet another example of a first switching section 114C of an optical interconnection module according to an embodiment of the present disclosure.

Referring to Fig. 2A, a first optical switching section 114A according to an embodiment of the present disclosure may include a plurality of first optical switching units 1141A. Each first optical switching unit 1141A may include a first optical switching input port, a first optical switching output port, a second optical switching output port, and a third optical switching output port, and an optical signal input from the first optical switching input port may be selectively output from the first optical switching output port, the second optical switching output port, or the third optical switching output port. Compared with the first optical switching section 114 shown in Fig. 1B, the first optical switching section 114A may include a smaller number of optical switching units, so that the number of elements in the photonic integrated circuit chip can be reduced and the internal structure of the photonic integrated circuit chip can be simplified.

Referring to Fig. 2B, in addition to the first to third optical switching output ports, a first optical switching section 114B according to an embodiment of the present disclosure may further include a plurality of sixth optical switching output ports and a plurality of seventh optical switching output ports. An optical signal input from each first optical switching input port of the first optical switching section 114B may be selectively output from a corresponding one of the plurality of first optical switching output ports, a corresponding one of the plurality of second optical switching output ports, a corresponding one of the plurality of third optical switching output ports, a corresponding one of the plurality of sixth optical switching output ports, or a corresponding one of the plurality of seventh optical switching output ports. In this case, compared with the embodiment shown in Fig. 1B, optical signals entering the photonic integrated circuit chip have more optional transmission paths, so that the optical interconnection module 100 can provide more flexible interconnection, thereby further reducing the number of redundant devices of the computing system and further saving costs.

According to an embodiment of the present disclosure, as shown in Fig. 2B, a first optical switching section 114B according to an embodiment of the present disclosure may include a plurality of first optical switching units 1141B, a plurality of second optical switching units 1142B, a plurality of third optical switching units 1143B, and a plurality of fourth optical switching units 1144B. Each first optical switching unit 1141B may include a first optical switching input port, a first optical switching output port, and a fifth optical switching output port, and an optical signal input from the first optical switching input port may be selectively output from the first optical switching output port or the fifth optical switching output port. Each second optical switching unit 1142B may include a third optical switching input port, an eighth optical switching output port, and a ninth optical switching output port, and an optical signal input from the third optical switching input port may be selectively output from the eighth optical switching output port or the ninth optical switching output port. The third optical switching input port of each second optical switching unit 1142B may be connected to the fifth optical switching output port of corresponding one first optical switching unit 1141B of the plurality of first optical switching units 1141B. Each third optical switching unit 1143B may include a fourth optical switching input port, a second optical switching output port, and a third optical switching output port, and an optical signal input from the fourth optical switching input port may be selectively output from the second optical switching output port or the third optical switching output port. The fourth optical switching input port of each third optical switching unit 1143B may be connected to the eighth optical switching output port of a corresponding one second optical switching unit 1142B of the plurality of second optical switching units 1142B. Each fourth optical switching unit 1144B may include a fifth optical switching input port, a sixth optical switching output port, and a seventh optical switching output port, and an optical signal input from the fifth optical switching input port may be selectively output from the sixth optical switching output port or the seventh optical switching output port. The fifth optical switching input port of each fourth optical switching unit 1144B may be connected to the ninth optical switching output port of a corresponding one second optical switching unit 1142B of the plurality of second optical switching units 1142B.

Referring to Fig. 2C, a first optical switching section 114C according to an embodiment of the present disclosure may include a plurality of first optical switching units 1141C. Each first optical switching unit 1141C may include a first optical switching input port, a first optical switching output port, a second optical switching output port, a third optical switching output port, a sixth optical switching output port, and a seventh optical switching output port. An optical signal input from the first optical switching input port may be selectively output from the first optical switching output port, the second optical switching output port, the third optical switching output port, the sixth optical switching output port, or the seventh optical switching output port. Compared with the first optical switching section 114B shown in Fig. 2B, the first optical switching section 114C may include a smaller number of optical switching units, thereby reducing the number of elements in the photonic integrated circuit chip and simplifying the internal structure of the photonic integrated circuit chip.

In a photonic integrated circuit chip including the first optical switching section 114B or 114C, in addition to the first to fourth optical couplers 1191 to 1194, a fifth optical coupler 1195, a sixth optical coupler 1196, a seventh optical coupler (not shown), and an eighth optical coupler (not shown) may be further included. Furthermore, in a photonic integrated circuit chip including the first optical switching section 114B or 114C, in addition to the first and second optical signal output ports and the first and second optical signal input ports, third and fourth optical signal output ports and third and fourth optical signal input ports may be further included.

The fifth optical coupler 1195 may be connected between the plurality of sixth optical switching output ports of the first optical switching section 114B or 114C and the third optical signal output port of the photonic integrated circuit chip, and output optical signals from the plurality of sixth optical switching output ports of the first optical switching section 114B or 114C to the outside of the optical interconnection module via the third optical signal output port of the photonic integrated circuit chip through an external optical fiber. The sixth optical coupler 1196 may be connected between the plurality of seventh optical switching output ports of the first optical switching section 114B or 114C and the fourth optical signal output port of the photonic integrated circuit chip, and output optical signals from the plurality of seventh optical switching output ports of the first optical switching section 114B or 114C to the outside of the optical interconnection module via the fourth optical signal output port of the photonic integrated circuit chip through an external optical fiber. The seventh optical coupler (not shown) may be connected between the fourth portion of the plurality of first optical input ports of the optical-to-electrical conversion section 118 and the third optical signal input port of the photonic integrated circuit chip, and transmit optical signals input from the outside of the optical interconnection module through an external optical fiber via the third optical signal input port of the photonic integrated circuit chip to the fourth portion of the plurality of first optical input ports of the optical-to-electrical conversion section 118. The eighth optical coupler (not shown) may be connected between the fifth portion of the plurality of first optical input ports of the optical-to-electrical conversion section 118 and the fourth optical signal input port of the photonic integrated circuit chip, and transmit optical signals input from the outside of the optical interconnection module through an external optical fiber via the fourth optical signal input port of the photonic integrated circuit chip to the fifth portion of the plurality of first optical input ports of the optical-to-electrical conversion section 118.

It should be understood that the first optical switching sections shown in Figs. 1B, 2A, 2B, and 2C are merely examples, and the present disclosure is not limited thereto. The first optical switching section may include other structures.

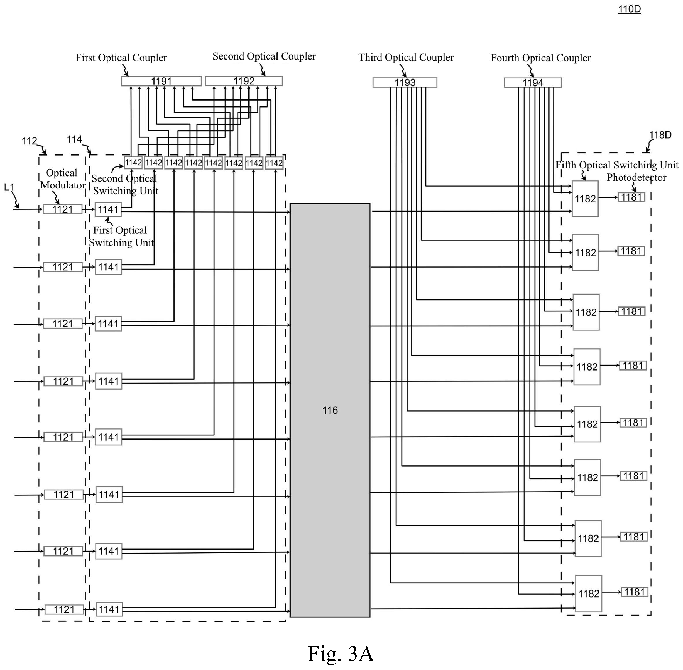

Fig. 3A shows a schematic plan view of another example of an optical interconnection module according to an embodiment of the present disclosure.

Referring to Fig. 3A, according to an embodiment of the present disclosure, the optical-to-electrical conversion section 118D may further include a plurality of fifth optical switching units 1182. The plurality of first optical input ports of the optical-to-electrical conversion section 118D may include a first portion, a second portion, and a third portion. Each fifth optical switching unit 1182 may be used to selectively transmit an optical signal output from corresponding one first optical input port in the first portion, corresponding one first optical input port in the second portion, or corresponding one first optical input port in the third portion to corresponding one of the plurality of photodetectors 1181.

According to an embodiment of the present disclosure, as shown in Fig. 3A, each photodetector 1181 may be connected to the third optical coupler 1193, the fourth optical coupler 1194, and the second optical switching section 116 via a corresponding one of the plurality of fifth optical switching units 1182. Each fifth optical switching unit 1182 may selectively transmit an optical signal from the second optical switching section 116, the third optical coupler 1193, or the fourth optical coupler 1194 to a corresponding one of the photodetectors 1181.

By including the fifth optical switching units 1182, each photodetector 1181 of the optical-to-electrical conversion section 118D can receive an optical signal from the second optical switching section 116, an optical signal from the third optical coupler 1193, and an optical signal from the fourth optical coupler 1194 at different times, thereby reducing the number of photodetectors 1181 in the optical-to-electrical conversion section 118D.

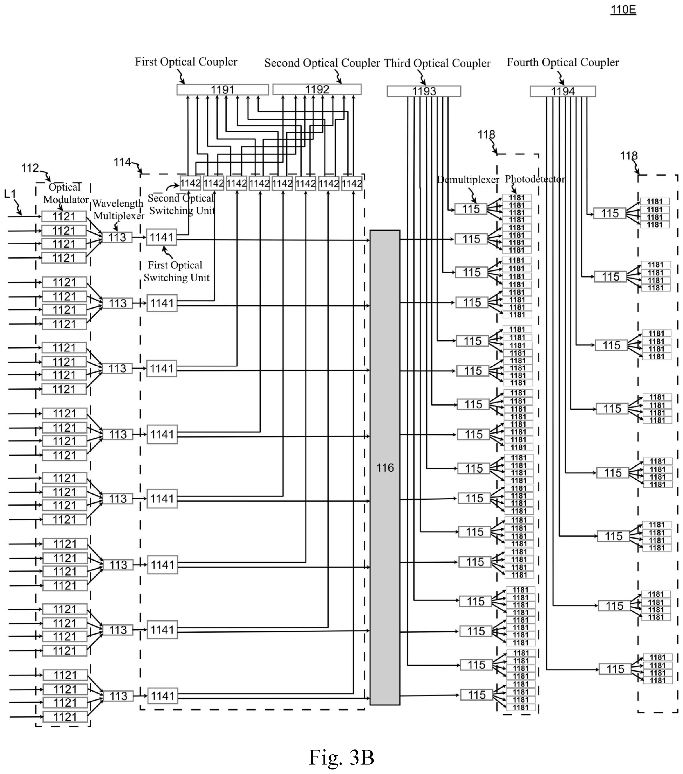

Fig. 3B shows a schematic plan view of another example of an optical interconnection module according to an embodiment of the present disclosure.

Referring to Fig. 3B, the photonic integrated circuit chip 110E according to an embodiment of the present disclosure may further include a plurality of wavelength multiplexers 113. Each wavelength multiplexer 113 may include a plurality of second optical input ports and one second optical output port. Light of different wavelengths from the electrical-to-optical conversion section 112 may be respectively input from the plurality of second optical input ports of each wavelength multiplexer 113 and output from the one second optical output port of each wavelength multiplexer 113. The one second optical output port of each wavelength multiplexer 113 may be connected to a corresponding one of the plurality of first optical switching input ports of the first optical switching section 114.

According to an embodiment of the present disclosure, each first optical switching input port or each first optical switching unit 1141 of the first optical switching section 114 may be connected to a group of optical modulators 1121 among the plurality of optical modulators 1121 in the electrical-to-optical conversion section 112 via one wavelength multiplexer 113. Specifically, each of the plurality of second optical input ports of each wavelength multiplexer 113 may be connected to one optical modulator 1121, and the one second optical output port of each wavelength multiplexer 113 may be connected to one first optical switching input port of the first optical switching section 114.

According to an embodiment of the present disclosure, different modulators in each group of optical modulators 1121 among the plurality of optical modulators 1121 may modulate optical carriers of different wavelengths. Each optical modulator 1121 may modulate an optical carrier L1 according to an electrical signal received from the transceiver electrical chip 120, thereby modulating information carried by the electrical signal onto the optical carrier L1 to output an optical signal carrying the information. Each wavelength multiplexer 113 may combine optical signals of different wavelengths output by corresponding one group of optical modulators 1121 into one beam of optical signals. The transmission path of the beam of optical signal is selected by the first optical switching section 114 such that the beam of optical signal is transmitted to the second optical switching section 116, to the outside of the optical interconnection module 100 via the first optical coupler 1191, or to the outside of the optical interconnection module 100 via the second optical coupler 1192.

The photonic integrated circuit chip 110E according to an embodiment of the present disclosure may further include a plurality of demultiplexers 115. Each demultiplexer 115 may include one third optical input port and a plurality of third optical output ports. Light of different wavelengths from the outside of the optical interconnection module 100 or the second optical switching section 116 of the optical interconnection module 100 is input from the one third optical input port of each demultiplexer 115 and respectively output from the plurality of third optical output ports of each demultiplexer 115. The plurality of third optical output ports of each demultiplexer 115 may be connected to corresponding first optical input ports among the plurality of first optical input ports of the optical-to-electrical conversion section 118.

According to an embodiment of the present disclosure, the plurality of demultiplexers 115 may include a first group of demultiplexers 115, a second group of demultiplexers 115, and a third group of demultiplexers 115. The first group of demultiplexers 115 may be connected between the plurality of fourth optical switching output ports of the second optical switching section 116 and the first portion of the plurality of first optical input ports of the optical-to-electrical conversion section 118 (e.g., the first portion of the plurality of photodetectors 1181). The second group of demultiplexers 115 may be connected between the first optical signal input port of the photonic integrated circuit chip 110 and the second portion of the plurality of first optical input ports of the optical-to-electrical conversion section 118, e.g., between the third optical coupler 1193 and the second portion of the plurality of photodetectors 1181. The third group of demultiplexers 115 may be connected between the second optical signal input port of the photonic integrated circuit chip 110 and the third portion of the plurality of first optical input ports of the optical-to-electrical conversion section 118, e.g., between the fourth optical coupler 1194 and the third portion of the plurality of photodetectors 1181. Optical signals of different wavelengths from the outside of the optical interconnection module 100 or the second optical switching section 116 may be demultiplexed by each demultiplexer 115 and then transmitted via different optical fiber paths to a corresponding photodetector 1181 among the plurality of photodetectors 1181 for optical-to-electrical conversion.

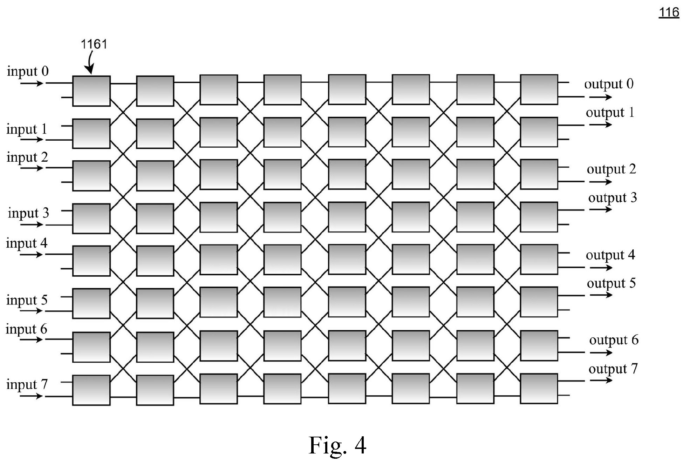

Fig. 4 shows a schematic plan view of an example of the second optical switching section 116 according to an embodiment of the present disclosure.

Referring to Fig. 4, the second optical switching section 116 according to an embodiment of the present disclosure may include a plurality of sixth optical switching units 1161. According to an embodiment of the present disclosure, the second optical switching section 116 may be an 8×8 strictly non-blocking optical switch composed of 64 2×2 sixth optical switching units 1161. By controlling the signal output port of each sixth optical switching unit 1161, arbitrary path combinations between the eight input channels and the eight output channels in Fig. 4 can be realized, and the insertion loss on each path is independent of the path. Therefore, the topology from input to output can be changed. Furthermore, according to an embodiment of the present disclosure, the 8×8 strictly non-blocking optical switch may be further repeated horizontally to meet larger bandwidth switching requirements. It should be understood that the structure of the second optical switching section 116 shown in Fig. 4 is merely an example, and the second optical switching section 116 may be configured as a non-blocking optical switch of any n×n structure according to actual needs. The second optical switching section 116 can realize reconfigurable optical interconnection to change the network topology for different artificial intelligence applications, thereby optimizing data movement efficiency and improving computing system performance.

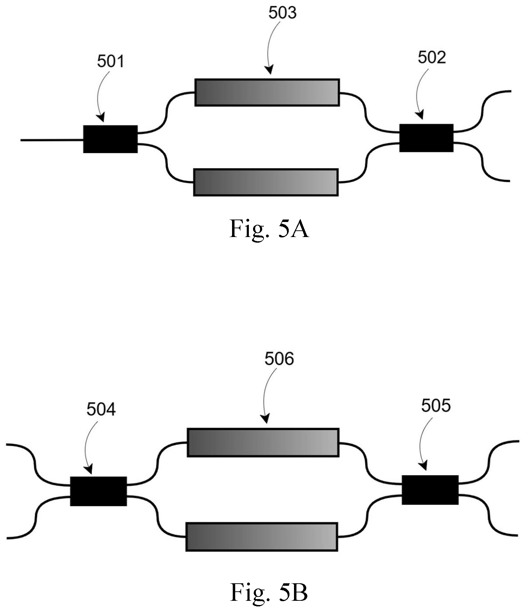

Fig. 5A shows a schematic plan view of an example of an optical switching unit of the first optical switching section according to an embodiment of the present disclosure. Fig. 5B shows a schematic plan view of an example of an optical switching unit of the second optical switching section according to an embodiment of the present disclosure.

Referring to Fig. 5A, the optical switching unit of the first optical switching section according to an embodiment of the present disclosure (e.g., the first to fourth optical switching units described with reference to Figs. 1B, 2A, 2B, and 2C) may be a 1×2 optical switching unit. According to an embodiment of the present disclosure, the optical switching unit of the first optical switching section may be a MEMS optical path switching unit or a Mach-Zehnder interferometer (MZI) optical path switching unit. For example, as shown in Fig. 5A, the first optical switching unit is an MZI optical path switching unit. Each optical switching unit of the first optical switching section may include a first beam splitter 501, a second beam splitter 502, and two phase shifters 503. The first beam splitter 501 may include one fourth optical input port and two fourth optical output ports. The second beam splitter 502 may include two fifth optical input ports and two fifth optical output ports. The two phase shifters 503 may be respectively connected between the two fourth optical output ports of the first beam splitter 501 and the two fifth optical input ports of the second beam splitter 502. According to an embodiment of the present disclosure, each phase shifter 503 may be an electrical-to-optical or thermo-optic phase shifter. By controlling an external electric field or heat applied to each phase shifter 503, the refractive index of the optical material included in the phase shifter 503 is changed, thereby controlling the phase of the optical signal transmitted therein, and the output port of the optical signal is selected using an interference effect.

Referring to Fig. 5B, the optical switching unit of the second optical switching section according to an embodiment of the present disclosure (e.g., the sixth optical switching unit 1161 described with reference to Fig. 4) may be a 2×2 optical switching unit. According to an embodiment of the present disclosure, the optical switching unit of the second optical switching section may be an MZI optical path switching unit. For example, as shown in Fig. 5B, each optical switching unit of the second optical switching section may include a third beam splitter 504, a fourth beam splitter 505, and two phase shifters 506. The third beam splitter 504 may include two sixth optical input ports and two sixth optical output ports. The fourth beam splitter 505 may include two seventh optical input ports and two seventh optical output ports. The two phase shifters 506 may be respectively connected between the two sixth optical output ports of the third beam splitter 504 and the two seventh optical input ports of the fourth beam splitter 505. According to an embodiment of the present disclosure, each phase shifter 506 may be an electrical-to-optical or thermo-optic phase shifter. By controlling an external electric field or heat applied to each phase shifter 506, the refractive index of the optical material included in the phase shifter 506 is changed, thereby controlling the phase of the optical signal transmitted therein, and the output port of the optical signal is selected using an interference effect.

According to an embodiment of the present disclosure, the photonic integrated circuit chip 110 may further include a seventh optical coupler (not shown) and an optical power splitter (not shown). The seventh optical coupler may be configured to input light from an external light source into the photonic integrated circuit chip 110. The optical power splitter may be connected to the seventh optical coupler and configured to split one input light into a plurality of output lights. Each of the plurality of output lights includes substantially the same power, and the plurality of output lights are transmitted to respective optical modulators 1121.

In the prior art, a plurality of computing modules realize point-to-point full interconnection on a printed circuit board (PCB) through PCB traces. However, the PCB traces are fixed, so the connections between the computing modules cannot be flexibly changed. According to an embodiment of the present disclosure, an optical interconnection module may be adopted so that the connections between computing modules are reconfigurable. Therefore, the network topology can be changed for different artificial intelligence applications, data movement efficiency can be optimized, and computing system performance can be improved. Furthermore, according to an embodiment of the present disclosure, an optical signal entering each first optical switching input port of the first optical switching section of the photonic integrated circuit chip of the optical interconnection module may be selectively output from one of at least three optical switching output ports (e.g., the first to third optical switching output ports as shown in Fig. 1B, or the first to third optical switching output ports and the sixth and seventh optical switching output ports as shown in Fig. 2B), and at least two optical switching output ports are connected to optical signal output ports for external communication (e.g., the second to third optical switching output ports are connected to optical signal output ports as shown in Fig. 1B, or the second to third optical switching output ports and the sixth and seventh optical switching output ports are connected to optical signal output ports as shown in Fig. 2B). This allows the optical interconnection module to be connected to more other optical interconnection modules. Therefore, in the case of forming a large-scale computing system, the optical interconnection module can provide more flexible connection relationships to reduce the number of redundant devices of the computing system, thereby saving costs.

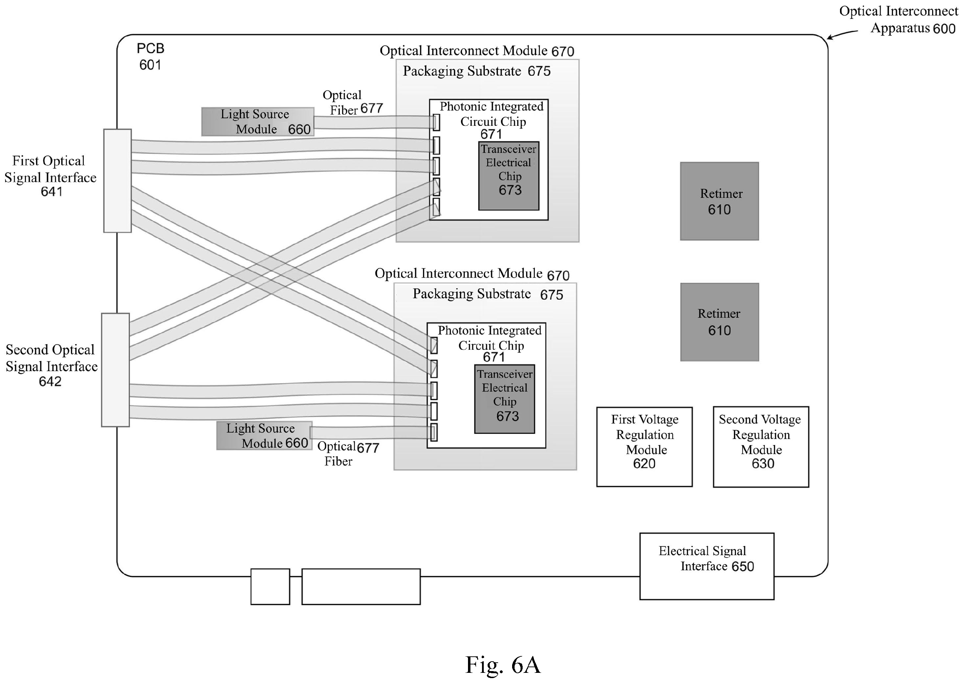

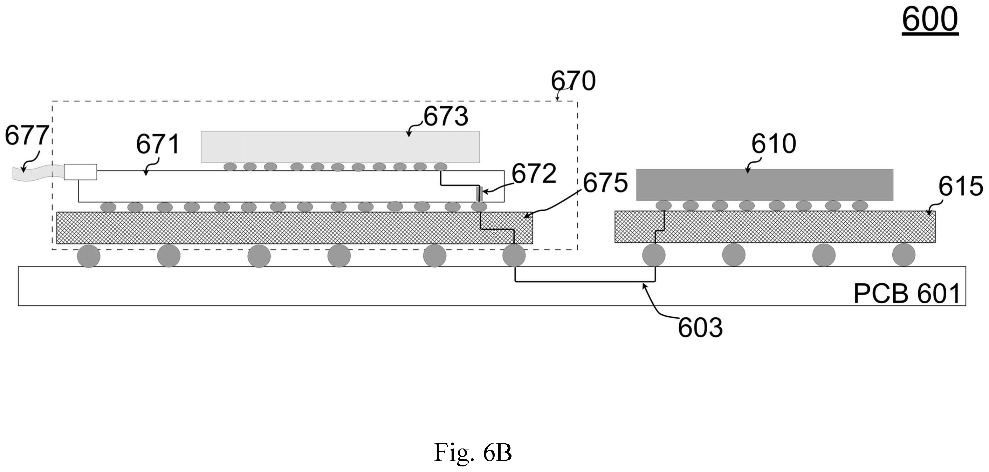

Fig. 6A shows a schematic plan view of an example of an optical interconnection apparatus 600 according to an embodiment of the present disclosure. Fig. 6B shows a schematic cross-sectional view of an example of the optical interconnection apparatus 600 according to an embodiment of the present disclosure.

Referring to Figs. 6A and 6B, the optical interconnection apparatus 600 according to an embodiment of the present disclosure may include a first printed circuit board (PCB) 601; one or more optical interconnection modules 670 disposed on the first PCB 601, where the optical interconnection module 670 may include a photonic integrated circuit chip 671, a transceiver electrical chip 673, and a packaging substrate 675, and may be substantially the same as the optical interconnection module according to any of the embodiments described above with reference to Figs. 1A to 5B, so repeated descriptions are omitted here; an electrical signal interface 650 connected to the transceiver electrical chip 673 of the optical interconnection module 670; and a first optical signal interface 641 and a second optical signal interface 642 connected to the photonic integrated circuit chip 671 of the optical interconnection module 670. For example, the optical interconnection apparatus 600 may take the form of an expansion card, but the present disclosure is not limited thereto.

The electrical signal interface 650 may be disposed on the first PCB 601 and may be used to receive and/or transmit digital electrical signals. The first and second optical signal interfaces 641 and 642 may be connected to optical signal input ports and optical signal output ports of the photonic integrated circuit chip 671. In the photonic integrated circuit chip 671, the plurality of second optical switching output ports and the plurality of third optical switching output ports of the first optical switching section may be connected to the first optical signal output port and the second optical signal output port, respectively; the first portion of the plurality of first optical input ports of the optical-to-electrical conversion section may be connected to the plurality of fourth optical switching output ports of the second optical switching section; and the second portion and the third portion of the plurality of first optical input ports of the optical-to-electrical conversion section may be connected to the first optical signal input port and the second optical signal input port, respectively. The first and second optical signal interfaces 641 and 642 may be disposed on the first PCB 601. Specifically, the first optical signal interface 641 may be connected to the plurality of second optical switching output ports of the first optical switching section of the photonic integrated circuit chip 671 and the second portion of the plurality of first optical input ports of the optical-to-electrical conversion section of the photonic integrated circuit chip 671; the second optical signal interface 642 may be connected to the plurality of third optical switching output ports of the first optical switching section of the photonic integrated circuit chip 671 and the third portion of the plurality of first optical input ports of the optical-to-electrical conversion section of the photonic integrated circuit chip 671. Although Fig. 6A shows two optical interconnection modules 670 sharing one first optical signal interface 641 and one second optical signal interface 642, the present disclosure is not limited thereto. The optical interconnection apparatus 600 according to an embodiment of the present disclosure may include other numbers of optical interconnection modules 670, and in addition, a first optical signal interface and a second optical signal interface may be respectively configured for each optical interconnection module 670. Furthermore, although Fig. 6A shows that the first and second optical signal interfaces 641 and 642 connect to the optical signal input port and the optical signal output port of the photonic integrated circuit chip 671, respectively, the present disclosure is not limited thereto. Another two optical signal interfaces may also be included, with each optical signal interface connected only to the optical signal input port or the optical signal output port of the photonic integrated circuit chip 671. For example, the first optical signal interface 641 may be connected to the plurality of second optical switching output ports of the first optical switching section of the photonic integrated circuit chip 671; the second optical signal interface 642 may be connected to the plurality of third optical switching output ports of the first optical switching section of the photonic integrated circuit chip 671; a fifth optical signal interface (not shown) may be connected to the second portion of the plurality of first optical input ports of the optical-to-electrical conversion section of the photonic integrated circuit chip 671; and a sixth optical signal interface (not shown) may be connected to the third portion of the plurality of first optical input ports of the optical-to-electrical conversion section of the photonic integrated circuit chip 671.

For example, the optical interconnection apparatus 600 may further include a third optical signal interface and a fourth optical signal interface. The first optical switching section of the photonic integrated circuit chip 671 may include a plurality of first optical switching input ports, a plurality of first optical switching output ports, a plurality of second optical switching output ports, a plurality of third optical switching output ports, a plurality of sixth optical switching output ports, and a plurality of seventh optical switching output ports. An optical signal input from each first optical switching input port of the first optical switching section is selectively output from the corresponding one of the plurality of first optical switching output ports, the corresponding one of the plurality of second optical switching output ports, the corresponding one of the plurality of third optical switching output ports, the corresponding one of the plurality of sixth optical switching output ports, or the corresponding one of the plurality of seventh optical switching output ports. The third optical signal interface may be connected to the plurality of sixth optical switching output ports of the first optical switching section of the photonic integrated circuit chip 671 and the fourth portion of the plurality of first optical input ports of the optical-to-electrical conversion section. The fourth optical signal interface may be connected to the plurality of seventh optical switching output ports of the first optical switching section of the photonic integrated circuit chip 671 and the fifth portion of the plurality of first optical input ports of the optical-to-electrical conversion section.

According to an embodiment of the present disclosure, each optical interconnection apparatus 600 may receive, via the electrical signal interface 650, control signals from an external optical switching control electrical chip (not shown) for controlling the first optical switching section and the second optical switching section in each optical interconnection module 670. The control signals may control transmission paths of optical signals in the first optical switching section and the second optical switching section. For example, when the optical switching units of the first optical switching section and the optical switching units of the second optical switching section are MZI optical path switching units as described above, the control signals may control an external electric field or heat applied to phase shifters of the MZI optical path switching units to control the transmission paths of the optical signals.

According to an embodiment of the present disclosure, the optical interconnection apparatus 600 may further include one or more retimers 610. The one or more retimers 610 may be disposed on the first PCB 601, connected between the electrical signal interface 650 and the one or more optical interconnection modules 670, and be used to convert a fifth electrical signal received from the electrical signal interface 650 into a third electrical signal output to the one or more optical interconnection modules 670, and convert a second electrical signal received from the one or more optical interconnection modules 670 into an eighth electrical signal output from the electrical signal interface 650. The retimer 610 may be used to solve signal attenuation and jitter problems in high-speed data transmission, ensure signal quality, and thus maintain the reliability and stability of data transmission.

Each retimer 610 may include a plurality of channels, and the electrical signal interface 650 may also include a plurality of channels. The total number of channels of the one or more retimers 610 may be equal to the total number of channels of the electrical signal interface 650. The one or more retimers 610 may be connected to the one or more optical interconnection modules 670 via conductive channels 603 on or in the first PCB 601. Although Fig. 6A shows two retimers 610 and one electrical signal interface 650, the present disclosure is not limited thereto. The optical interconnection apparatus 600 may include other numbers of electrical signal interfaces 650 and retimers 610, and the number of retimers 610 may vary according to the total number of channels of the electrical signal interface 650 of the optical interconnection apparatus 600 and the number of channels of each retimer 610. For example, in a case where the electrical signal interface 650 of the optical interconnection apparatus 600 includes 64 channels and each retimer 610 includes 16 channels, the optical interconnection apparatus 600 may include four retimers.

Similar to the number configuration of the retimers 610, the total number of channels of electrical interfaces of the optical interconnection modules 670 may be equal to the total number of channels of the electrical signal interface 650, and the number of optical interconnection modules 670 may vary according to the total number of channels of the electrical signal interface 650 and the number of channels of the electrical interface of each optical interconnection module 670.

According to an embodiment of the present disclosure, the optical interconnection apparatus 600 may further include a light source module 660 disposed on the first PCB 601 and used to generate optical carriers. The light source module 660 may be connected to the electrical-to-optical conversion section of the photonic integrated circuit chip 671 of each optical interconnection module 670, such that the generated optical carriers are output to the electrical-to-optical conversion section and converted by the electrical-to-optical conversion section into optical signals output to the first optical switching section of the photonic integrated circuit chip 671. The light source module 660 may be optically connected to the optical interconnection module 670 via an optical fiber 677 to input optical carriers to the optical interconnection module 670. Although Fig. 6A shows two light source modules 660, the present disclosure is not limited thereto. The optical interconnection apparatus 600 may include only one light source module 660, and the one light source module 660 may be connected to one or more optical interconnection modules 670 via optical fibers.

According to an embodiment of the present disclosure, the electrical signal interface 650 may receive an electrical signal from an external device (e.g., a computing module) of the optical interconnection apparatus 600. The electrical signal may be retimed and/or amplified by the retimer 610, and the retimed and/or amplified electrical signal may be transmitted to the optical interconnection module 670 via the conductive channel 603 on or in the first PCB 601, and further transmitted to the corresponding transceiver electrical chip 673 via a conductive channel in the packaging substrate 675 of the optical interconnection module 670 and a conductive via 672 in the photonic integrated circuit chip 671. The transceiver electrical chip 673 may send the received electrical signal to the photonic integrated circuit chip 671. The photonic integrated circuit chip 671 may modulate the electrical signal output by the transceiver electrical chip 673 onto an optical carrier generated by the light source module 660 via an electrical-to-optical conversion section (e.g., an optical modulator), thereby generating an optical signal carrying information. After optical path reconstruction through the first optical switching section and the second optical switching section in the photonic integrated circuit chip 671, the optical signal is output to a communication peer (e.g., another computing module connected to the optical interconnection apparatus 600) via the optical fiber 677 and the optical signal interfaces 641 and 642. On the other hand, optical signals received via the optical signal interfaces 641 and 642 and the optical fiber 677 may undergo optical-to-electrical conversion through a optical-to-electrical conversion section (e.g., a photodetector) of the photonic integrated circuit chip 671, and the converted electrical signals may be transmitted to a receiving end (e.g., the computing module) via the transceiver electrical chip 673, the retimer 610, and the electrical signal interface 650. By performing optical path reconstruction through the optical interconnection module 670 of the optical interconnection apparatus 600, connection relationships among multiple external devices (e.g., multiple computing modules) connected to the optical interconnection apparatus 600 can be changed.

According to an embodiment of the present disclosure, the optical interconnection apparatus 600 may further include a first voltage regulation module 620 (e.g., 54V to 12V) and a second voltage regulation module 630 (12V to voltage rails (i.e., maximum voltage input range)) used to regulate voltages of electrical signals transmitted between the electrical signal interface and the optical interconnection module 670.

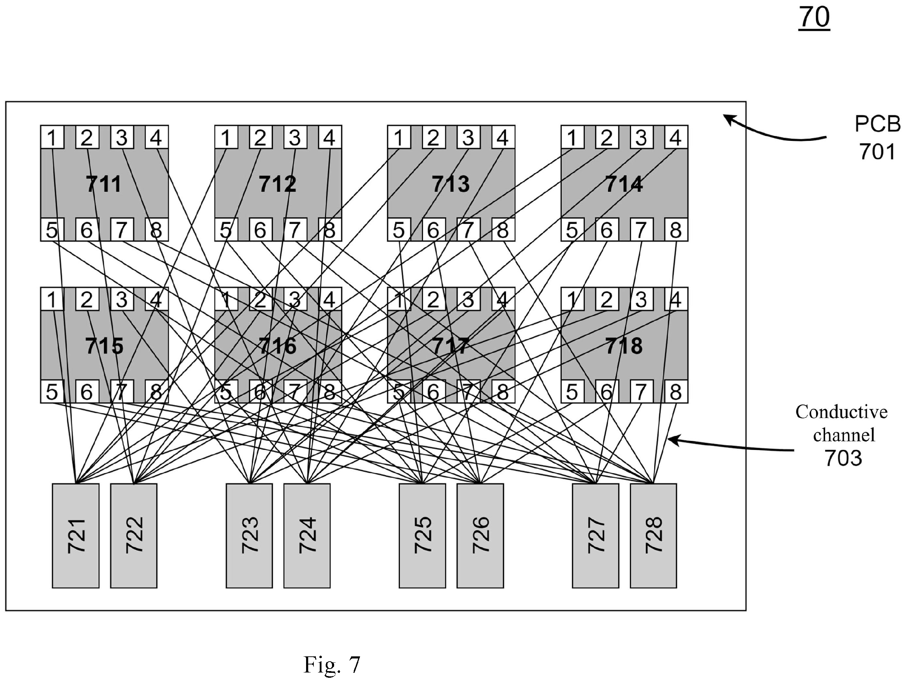

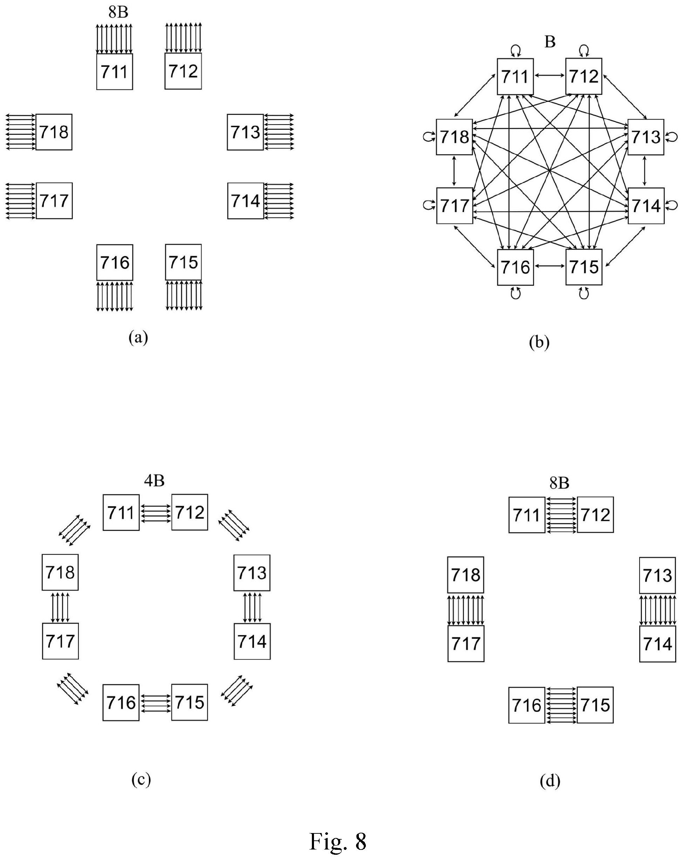

Fig. 7 shows a schematic plan view of an example of a computing apparatus according to an embodiment of the present disclosure. Fig. 8 shows a schematic diagram of a topology among computing modules according to an embodiment of the present disclosure.

Referring to Fig. 7, a computing apparatus 70 according to an embodiment of the present disclosure may include a second printed circuit board (PCB) 701, and a plurality of computing modules 711, 712, 713, 714, 715, 716, 717, and 718 and a plurality of optical interconnection apparatuses 721, 722, 723, 724, 725, 726, 727, and 728 disposed on the second PCB 701. The optical interconnection apparatuses 721-728 may be substantially the same as the optical interconnection apparatus 600 according to the embodiment described above with reference to Figs. 6A and 6B, so repeated descriptions are omitted here. According to an embodiment of the present disclosure, the second PCB 701 may be a Universal Base Board (UBB). According to an embodiment of the present disclosure, the plurality of computing modules 711-718 may be connected to the plurality of optical interconnection apparatuses 721-728 via conductive channels (e.g., PCB traces) 703 on the second PCB 701. The computing modules 711-718 may include high-speed long-reach SerDes interfaces to communicate with electrical signal interfaces of the optical interconnection apparatuses 721-728 (e.g., the electrical signal interface 650 in Fig. 6A). In the embodiment shown in Fig. 7, the number of computing modules and optical interconnection apparatuses is eight, and each computing module includes eight electrical signal interfaces. A first electrical signal interface among the eight electrical signal interfaces of each of the computing modules 711-718 is connected to the first optical interconnection apparatus 721, a second electrical signal interface among the eight electrical signal interfaces of each of the computing modules 711-718 is connected to the second optical interconnection apparatus 722, and so on.

The plurality of computing modules 711-718 may be OCP Accelerator Modules (OAM) introduced by the Open Compute Project (OCP), but the present disclosure is not limited thereto. Any one of the plurality of computing modules 711-718 may be of various other types, including but not limited to a Graphics Processing Unit (GPU), a Neural Processing Unit (NPU), a Tensor Processing Unit (TPU), an Intelligence Processing Unit (IPU), a Deep Learning Processing Unit (DPU), and the like. Furthermore, the numbers of optical interconnection apparatuses, computing modules, and their electrical signal interfaces shown in Fig. 7 are merely examples, and the present disclosure is not limited thereto.

According to an embodiment of the present disclosure, as described above with reference to Fig. 1B, the first optical switching section 114 of the photonic integrated circuit chip 110 of the optical interconnection module 100 may selectively transmit an optical signal to the second optical switching section 116 or to an optical signal output port of the photonic integrated circuit chip 110 (e.g., to an optical signal output port via the first optical coupler 1191 or the second optical coupler 1192). Therefore, communication between computing modules within the same computing apparatus 70 or communication between corresponding computing modules in different computing apparatuses 70 can be realized by controlling the first optical switching section and/or the second optical switching section of the optical interconnection module 100.

Specifically, to realize communication between corresponding computing modules within the same computing apparatus, the first optical switching unit connected to an output-end computing module may be controlled such that an optical signal modulated according to an electrical signal output by the output-end computing module is transmitted to the second optical switching section (e.g., to the second optical switching section 116 shown in Fig. 1B) but not to an optical signal output port of the photonic integrated circuit chip (e.g., not to the first optical coupler 1191 and the second optical coupler 1192 shown in Fig. 1B); and the second optical switching section may be controlled to select a transmission path such that an optical signal entering the second optical switching section is transmitted via the selected transmission path to a photodetector connected to a target computing module. In addition, to realize communication between corresponding computing modules in different computing apparatuses, the first optical switching unit connected to an output-end computing module in one computing apparatus may be controlled such that an optical signal modulated according to an electrical signal output by the output-end computing module is transmitted to an optical signal output port of the photonic integrated circuit chip (e.g., to the first optical coupler 1191 and the second optical coupler 1192 shown in Fig. 1B) but not to the second optical switching section (e.g., not to the second optical switching section 116 shown in Fig. 1B), so that the optical signal is transmitted via an external optical fiber from an optical signal input port (e.g., from the third optical coupler 1193 and the fourth optical coupler 1194 shown in Fig. 1B) to a corresponding photodetector of a corresponding optical interconnection module connected to a target computing module in another computing apparatus.

Referring to Fig. 8, a connection topology among the plurality of computing modules 711-718 can be reconfigured through an optical interconnection apparatus (which includes an optical interconnection module including a first optical switching section and a second optical switching section). For example, the connection topology among the computing modules 711-718 can be changed in real time to full external interconnection ((a) in Fig. 8), full internal interconnection ((b) in Fig. 8), ring ((c) in Fig. 8), or point-to-point ((d) in Fig. 8).

For example, to realize the connection topology shown in (a) of Fig. 8, the first optical switching units of all optical interconnection apparatuses may be controlled such that all optical signals modulated according to electrical signals output by the computing modules 711-718 are transmitted to optical signal output ports of the photonic integrated circuit chip (e.g., to the first optical coupler 1191 and the second optical coupler 1192 shown in Fig. 1B) but not to the second optical switching section (e.g., not to the second optical switching section 116 shown in Fig. 1B). As another example, to realize the connection topologies shown in (b)-(d) of Fig. 8, the first optical switching units of all optical interconnection apparatuses may be controlled such that all optical signals modulated according to electrical signals output by the computing modules 711-718 are transmitted to the second optical switching section (e.g., to the second optical switching section 116 shown in Fig. 1B) but not to optical signal output ports of the photonic integrated circuit chip (e.g., not to the first optical coupler 1191 and the second optical coupler 1192 shown in Fig. 1B); and the second optical switching section may be controlled to select transmission paths such that respective optical signals entering the second optical switching section are transmitted via the selected transmission paths to corresponding photodetectors.

Therefore, the communication bandwidth between the first computing module 711 and the second computing module 712 can be switched in real time among bandwidth B ((b) in Fig. 8: full interconnection), bandwidth 4B ((c) in Fig. 8: ring), and bandwidth 8B ((d) in Fig. 8: point-to-point), so that bandwidth requirements of different communication algorithms can be matched, bandwidth utilization can be improved, and thus the overall operating efficiency of an artificial intelligence computing system can be improved.

It should be understood that the connection topology among computing modules is not limited to the topology shown in Fig. 8. Various other forms of connection topologies can be realized by controlling the first optical switching section and/or the second optical switching section of the optical interconnection module in the optical interconnection apparatus according to actual needs.

In the present application, changing the topology does not require manual modification of optical fiber connections between different computing modules, but only control of the first optical switching section and/or the second optical switching section of the optical interconnection module in the optical interconnection apparatus to switch link conduction. Therefore, it is more convenient and efficient, and can achieve millisecond-level topology switching latency.

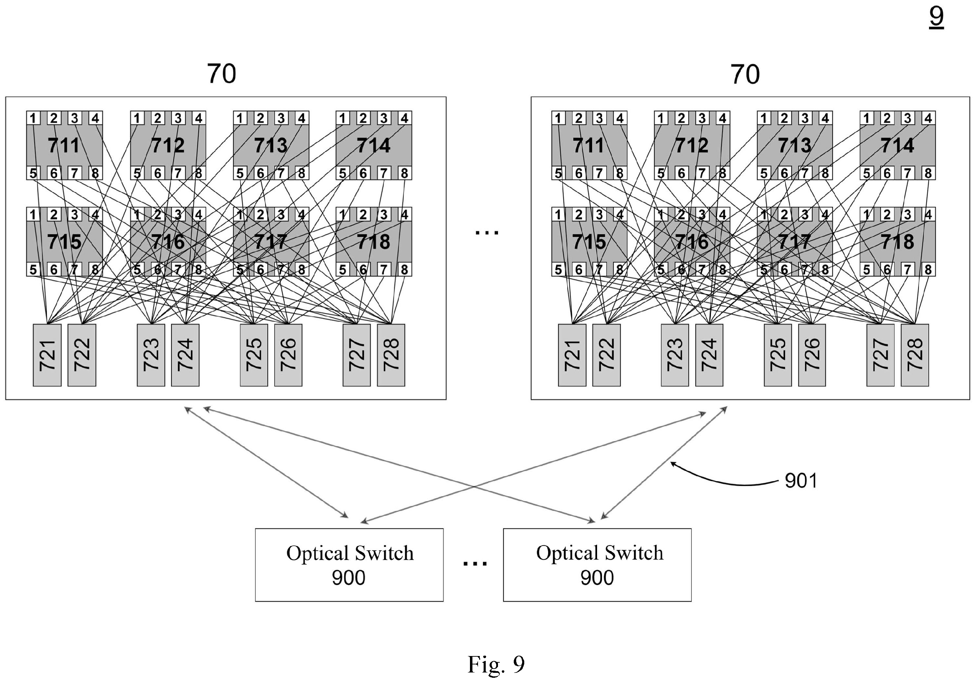

Fig. 9 shows a schematic plan view of an example of a computing system according to an embodiment of the present disclosure.

Referring to Fig. 9, a computing system 9 according to an embodiment of the present disclosure may include a plurality of computing apparatuses 70 and at least one optical switch 900. Optical interconnection may be established between each computing apparatus 70 and at least portion of the at least one optical switch 900 via one or more of the optical interconnection apparatuses 721-728 in each computing apparatus 70. Optical interconnection may be established between at least portion of the plurality of computing apparatuses 70 via the at least one optical switch 900.

According to an embodiment of the present disclosure, at least one optical switch 900 is capable of reconfiguring optical links among the plurality of computing apparatuses 70, so that any two of the plurality of computing apparatuses 70 communicate with each other.

According to an embodiment of the present disclosure, the plurality of computing apparatuses 70 may include a first computing apparatus, a second computing apparatus, and a third computing apparatus. The at least one optical switch 900 is capable of establishing optical links between a portion of the plurality of optical interconnection apparatuses 721-728 of the first computing apparatus and a portion of the plurality of optical interconnection apparatuses 721-728 of the second computing apparatus, and establishing optical links between the second portion of the plurality of optical interconnection apparatuses 721-728 of the first computing apparatus and a portion of the plurality of optical interconnection apparatuses 721-728 of the third computing apparatus, so that the first computing apparatus communicates with the second computing apparatus and the third computing apparatus simultaneously.

At least one optical switch 900 may control optical paths based on different physical principles, including piezoelectric, micro-electro-mechanical, electrical-to-optical, and others. For example, each optical switch 900 may be composed of a series of free-space optical components or a series of integrated optical components. The plurality of computing apparatuses 70 may be connected to the at least one optical switch 900 via optical fibers 901.

Different artificial intelligence applications have different computing and interconnection requirements. Large model training requires massive computing power and bandwidth migration, and usually relies on the collaboration of many computing modules. In such cases, an optical interconnection apparatus may be used to implement a topology in which all computing modules of a computing apparatus are interconnected externally. For small and medium-sized models, the switches may be placed in a standby power-saving mode, and multiple tasks may be assigned to multiple computing apparatuses for separate processing. In such cases, an optical interconnection apparatus may be used to implement a topology in which computing modules within the same computing apparatus are interconnected with each other. Such flexible configuration of network interconnection can accelerate different artificial intelligence applications.

In the present disclosure, the optical interconnection module breaks through the interconnection distance limitation caused by PCB traces in the prior art, realizes long-distance optical fiber connection, and facilitates large-scale expansion of computing modules. In addition, the present disclosure adopts an optical interconnection apparatus, so that the interconnection between computing modules is no longer fixed, but can be reconfigured in the field. Therefore, the topology can be changed according to a specific artificial intelligence model. Using reconfigurable optical interconnection enables rapid switching of interconnection topologies among different computing modules, thereby effectively improving bandwidth utilization and enhancing the scalability of artificial intelligence computing systems.

In the above description, embodiments of the present disclosure have been described with reference to the accompanying drawings. It should be understood that the above embodiments are merely illustrative, and those skilled in the art will recognize that the elements and combinations of processes of the present embodiments may be modified in various ways, and such modifications also fall within the scope of the present disclosure.

## Claims

1. An optical interconnection module, comprising:
a photonic integrated circuit chip; and
a transceiver electrical chip electrically connected to the photonic integrated circuit chip, wherein:
the photonic integrated circuit chip comprises an electrical-to-optical conversion section, a first optical switching section, a second optical switching section, and an optical-to-electrical conversion section,
the electrical-to-optical conversion section generates an optical signal output to the first optical switching section according to an electrical signal output from the transceiver electrical chip,
the first optical switching section comprises a plurality of first optical switching input ports, a plurality of first optical switching output ports, a plurality of second optical switching output ports, and a plurality of third optical switching output ports, an optical signal input from each first optical switching input port being selectively output from corresponding one of the plurality of first optical switching output ports, corresponding one of the plurality of second optical switching output ports, or corresponding one of the plurality of third optical switching output ports,
the second optical switching section comprises a plurality of second optical switching input ports and a plurality of fourth optical switching output ports connected by reconfigurable optical paths, each of the plurality of second optical switching input ports of the second optical switching section being connected to corresponding one of the plurality of first optical switching output ports of the first optical switching section,
the optical-to-electrical conversion section comprises a plurality of first optical input ports and a plurality of first electrical output ports, an optical signal input from the plurality of first optical input ports being converted into an electrical signal output from the plurality of first electrical output ports to the transceiver electrical chip, a first portion of the plurality of first optical input ports being respectively connected to the plurality of fourth optical switching output ports of the second optical switching section.

2. The optical interconnection module of claim 1, wherein
the first optical switching section comprises a plurality of first optical switching units and a plurality of second optical switching units,
each first optical switching unit comprises the first optical switching input port, the first optical switching output port, and a fifth optical switching output port, an optical signal input from the first optical switching input port being selectively output from the first optical switching output port or the fifth optical switching output port, and
each second optical switching unit comprises a third optical switching input port, the second optical switching output port, and the third optical switching output port, an optical signal input from the third optical switching input port being selectively output from the second optical switching output port or the third optical switching output port, the third optical switching input port of each second optical switching unit being connected to the fifth optical switching output port of corresponding one of the plurality of first optical switching units.

3. The optical interconnection module of claim 1, wherein the first optical switching section comprises a plurality of first optical switching units, each first optical switching unit comprising the first optical switching input port, the first optical switching output port, the second optical switching output port, and the third optical switching output port, an optical signal input from the first optical switching input port being selectively output from the first optical switching output port, the second optical switching output port, or the third optical switching output port.

4. The optical interconnection module of claim 1, wherein
the photonic integrated circuit chip further comprises a first optical coupler, a second optical coupler, a third optical coupler, and a fourth optical coupler,
the first optical coupler is connected to the plurality of second optical switching output ports of the first optical switching section, the second optical coupler is connected to the plurality of third optical switching output ports of the first optical switching section, and
the third optical coupler is connected to a second portion of the plurality of first optical input ports of the optical-to-electrical conversion section, the fourth optical coupler is connected to a third portion of the plurality of first optical input ports of the optical-to-electrical conversion section.

5. The optical interconnection module of claim 1, wherein
the first optical switching section further comprises a plurality of sixth optical switching output ports and a plurality of seventh optical switching output ports, and
an optical signal input from each first optical switching input port of the first optical switching section is selectively output from corresponding one of the plurality of first optical switching output ports, corresponding one of the plurality of second optical switching output ports, corresponding one of the plurality of third optical switching output ports, corresponding one of the plurality of sixth optical switching output ports, or corresponding one of the plurality of seventh optical switching output ports.

6. The optical interconnection module of claim 5, wherein
the first optical switching section comprises a plurality of first optical switching units, a plurality of second optical switching units, a plurality of third optical switching units, and a plurality of fourth optical switching units,
each first optical switching unit comprises the first optical switching input port, the first optical switching output port, and a fifth optical switching output port, an optical signal input from the first optical switching input port being selectively output from the first optical switching output port or the fifth optical switching output port,
each second optical switching unit comprises a third optical switching input port, an eighth optical switching output port, and a ninth optical switching output port, an optical signal input from the third optical switching input port being selectively output from the eighth optical switching output port or the ninth optical switching output port, the third optical switching input port of each second optical switching unit being connected to the fifth optical switching output port of corresponding one of the plurality of first optical switching units,
each third optical switching unit comprises a fourth optical switching input port, the second optical switching output port, and the third optical switching output port, an optical signal input from the fourth optical switching input port being selectively output from the second optical switching output port or the third optical switching output port, the fourth optical switching input port of each third optical switching unit being connected to the eighth optical switching output port of corresponding one of the plurality of second optical switching units, and
each fourth optical switching unit comprises a fifth optical switching input port, the sixth optical switching output port, and the seventh optical switching output port, an optical signal input from the fifth optical switching input port being selectively output from the sixth optical switching output port or the seventh optical switching output port, the fifth optical switching input port of each fourth optical switching unit being connected to the ninth optical switching output port of corresponding one of the plurality of second optical switching units.

7. The optical interconnection module of claim 5, wherein the first optical switching section comprises a plurality of first optical switching units, each first optical switching unit comprising the first optical switching input port, the first optical switching output port, the second optical switching output port, the third optical switching output port, the sixth optical switching output port, and the seventh optical switching output port, an optical signal input from the first optical switching input port being selectively output from the first optical switching output port, the second optical switching output port, the third optical switching output port, the sixth optical switching output port, or the seventh optical switching output port.

8. The optical interconnection module of claim 5, wherein
the photonic integrated circuit chip further comprises a first optical coupler, a second optical coupler, a third optical coupler, a fourth optical coupler, a fifth optical coupler, a sixth optical coupler, a seventh optical coupler, and an eighth optical coupler,
the first optical coupler is connected to the plurality of second optical switching output ports of the first optical switching section, the second optical coupler is connected to the plurality of third optical switching output ports of the first optical switching section,
the third optical coupler is connected to the second portion of the plurality of first optical input ports of the optical-to-electrical conversion section, the fourth optical coupler is connected to the third portion of the plurality of first optical input ports of the optical-to-electrical conversion section,
the fifth optical coupler is connected to the plurality of sixth optical switching output ports of the first optical switching section, the sixth optical coupler is connected to the plurality of seventh optical switching output ports of the first optical switching section, and
the seventh optical coupler is connected to a fourth portion of the plurality of first optical input ports of the optical-to-electrical conversion section, the eighth optical coupler is connected to a fifth portion of the plurality of first optical input ports of the optical-to-electrical conversion section.

9. The optical interconnection module of claim 1, wherein the electrical-to-optical conversion section comprises a plurality of optical modulators used to modulate optical carriers input to the plurality of optical modulators into the optical signals output to the first optical switching section according to the electrical signals output by the transceiver electrical chip.

10. The optical interconnection module of claim 1, wherein the optical-to-electrical conversion section further comprises a plurality of photodetectors used to convert optical signals input from the plurality of first optical input ports of the optical-to-electrical conversion section into the electrical signals output to the transceiver electrical chip.

11. The optical interconnection module of claim 10, wherein
the optical-to-electrical conversion section further comprises a plurality of fifth optical switching units,
the plurality of first optical input ports of the optical-to-electrical conversion section comprise the first portion, a second portion, and a third portion,
each fifth optical switching unit is used to selectively transmit an optical signal output from corresponding one of the first optical input ports in the first portion, corresponding one of the first optical input ports in the second portion, or corresponding one of the first optical input ports in the third portion to corresponding one of the plurality of photodetectors.

12. The optical interconnection module of claim 1, wherein
the photonic integrated circuit chip further comprises a plurality of wavelength multiplexers, each wavelength multiplexer comprising a plurality of second optical input ports and one second optical output port, light of different wavelengths from the electrical-to-optical conversion section being respectively input from the plurality of second optical input ports of each wavelength multiplexer and output from the one second optical output port of each wavelength multiplexer, and
the one second optical output port of each wavelength multiplexer is connected to corresponding one of the plurality of first optical switching input ports of the first optical switching section.

13. The optical interconnection module of claim 12, wherein
the photonic integrated circuit chip further comprises a plurality of demultiplexers, each demultiplexer comprising one third optical input port and a plurality of third optical output ports, light of different wavelengths from outside the optical interconnection module or from the second optical switching section of the optical interconnection module being input from the one third optical input port of each demultiplexer and respectively output from the plurality of third optical output ports of each demultiplexer, and
the plurality of third optical output ports of each demultiplexer are connected to corresponding first optical input ports among the plurality of first optical input ports of the optical-to-electrical conversion section.

14. The optical interconnection module of claim 2, wherein each of the first optical switching unit and the second optical switching unit comprises:
a first beam splitter comprising one fourth optical input port and two fourth optical output ports;
a second beam splitter comprising two fifth optical input ports and two fifth optical output ports; and
two phase shifters respectively connected between the two fourth optical output ports of the first beam splitter and the two fifth optical input ports of the second beam splitter.

15. The optical interconnection module of claim 1, wherein the second optical switching section comprises a plurality of sixth optical switching units, each sixth optical switching unit comprising:
a third beam splitter comprising two sixth optical input ports and two sixth optical output ports;
a fourth beam splitter comprising two seventh optical input ports and two seventh optical output ports; and
two phase shifters respectively connected between the two sixth optical output ports of the third beam splitter and the two seventh optical input ports of the fourth beam splitter.

16. The optical interconnection module of claim 1, further comprising a packaging substrate, wherein
the photonic integrated circuit chip is disposed on the packaging substrate, the transceiver electrical chip is flip-chip mounted on a surface of the photonic integrated circuit chip opposite to the packaging substrate, and
the transceiver electrical chip receives electrical signals from outside the optical interconnection module and transmits electrical signals to outside the optical interconnection module through a conductive via in the photonic integrated circuit chip.

17. The optical interconnection module of claim 1, further comprising:
a plurality of optical switching control electrical chips electrically connected to the photonic integrated circuit chip and used to control the first optical switching section and the second optical switching section to select transmission paths of optical signals in the first optical switching section and the second optical switching section.

18. An optical interconnection apparatus, comprising:
a first printed circuit board (PCB);
one or more optical interconnection modules according to any one of claims 1 to 17, disposed on the first PCB;
an electrical signal interface connected to the transceiver electrical chip of the optical interconnection module;
a first optical signal interface connected to the plurality of second optical switching output ports of the first optical switching section of the photonic integrated circuit chip of the optical interconnection module and to a second portion of the plurality of first optical input ports of the optical-to-electrical conversion section; and
a second optical signal interface connected to the plurality of third optical switching output ports of the first optical switching section of the photonic integrated circuit chip of the optical interconnection module and to a third portion of the plurality of first optical input ports of the optical-to-electrical conversion section.

19. The optical interconnection apparatus of claim 18, further comprising a third optical signal interface and a fourth optical signal interface, wherein:
the first optical switching section further comprises a plurality of sixth optical switching output ports and a plurality of seventh optical switching output ports,
an optical signal input from each first optical switching input port of the first optical switching section is selectively output from corresponding one of the plurality of first optical switching output ports, corresponding one of the plurality of second optical switching output ports, corresponding one of the plurality of third optical switching output ports, corresponding one of the plurality of sixth optical switching output ports, or corresponding one of the plurality of seventh optical switching output ports,
the third optical signal interface is connected to the plurality of sixth optical switching output ports of the first optical switching section of the photonic integrated circuit chip of the optical interconnection module and to a fourth portion of the plurality of first optical input ports of the optical-to-electrical conversion section, and
the fourth optical signal interface is connected to the plurality of seventh optical switching output ports of the first optical switching section of the photonic integrated circuit chip of the optical interconnection module and to a fifth portion of the plurality of first optical input ports of the optical-to-electrical conversion section.

20. The optical interconnection apparatus of claim 18, further comprising:
one or more retimers disposed on the first PCB, connected between the electrical signal interface and the one or more optical interconnection modules, and used to convert a first electrical signal received from the electrical signal interface into a second electrical signal output to the one or more optical interconnection modules and convert a third electrical signal received from the one or more optical interconnection modules into a fourth electrical signal output from the electrical signal interface.

21. The optical interconnection apparatus of claim 18, further comprising:
a light source module disposed on the first PCB and used to generate optical carriers, the light source module being connected to the electrical-to-optical conversion section of the photonic integrated circuit chip of each optical interconnection module such that the optical carriers are output to the electrical-to-optical conversion section and converted by the electrical-to-optical conversion section into the optical signals output to the first optical switching section of the photonic integrated circuit chip.

22. A computing system, comprising:
a plurality of computing apparatuses, each comprising a second printed circuit board (PCB), and a plurality of computing modules and a plurality of optical interconnection apparatuses according to any one of claims 18 to 21 disposed on the second PCB; and
at least one optical switch, wherein
optical interconnection is established between each computing apparatus and at least portion of the at least one optical switch via one or more of the optical interconnection apparatuses in each computing apparatus, and
optical interconnection is established between at least portion of the plurality of computing apparatuses via the at least one optical switch.

23. The computing system of claim 22, wherein
the at least one optical switch is capable of reconfiguring optical links between the plurality of computing apparatuses so that any two of the plurality of computing apparatuses communicate with each other.

24. The computing system of claim 22, wherein
the plurality of computing apparatuses comprise a first computing apparatus, a second computing apparatus, and a third computing apparatus, and
the at least one optical switch is capable of establishing optical links between a first portion of the plurality of optical interconnection apparatuses of the first computing apparatus and a portion of the plurality of optical interconnection apparatuses of the second computing apparatus, and establishing optical links between a second portion of the plurality of optical interconnection apparatuses of the first computing apparatus and a portion of the plurality of optical interconnection apparatuses of the third computing apparatus, so that the first computing apparatus communicates with the second computing apparatus and the third computing apparatus simultaneously.
